# EUROPÄISCHE PATENTSCHRIFT

(11) **EP 4 227 570 B1**
(45) Veröffentlichungstag und Bekanntmachung des Hinweises auf die Patenterteilung: **17.12.2025**
(21) Anmeldenummer: 23169667.5
(22) Anmeldetag: 26.01.2018
(51) Int. Cl.: F16L 59/02, C09K 5/06, F16L 59/04, F16L 59/08, F28D 20/02

(54) **VERFAHREN ZUM HALTEN DER TEMPERATUR VON FLUIDEN MEDIEN**
METHOD FOR MAINTAINING THE TEMPERATURE OF FLUIDS AND DEVICE
PROCÉDÉ DE MAINTIEN DE LA TEMPÉRATURE DE FLUIDES ET DISPOSITIF

(30) Priorität: 30.01.2017 EP 17153846
(43) Veröffentlichungstag der Anmeldung: 16.08.2023
(62) Teilanmeldung aus: 18702226.4
(73) Patentinhaber: swisspor Management AG, 6312 Steinhausen (CH)
(72) Erfinder: FISCHER, Ludger, 6317 Oberwil bei Zug (CH)
(74) Vertreter: Stolmár & Partner Intellectual Property GmbH

(56) Entgegenhaltungen:
- EP-A1- 2 712 893
- WO-A1-02/062918
- WO-A1-02/16733
- WO-A1-2011/161472
- WO-A2-2012/175994
- DE-A1- 10 256 553

## Beschreibung

Die vorliegende Erfindung bezieht sich auf ein Verfahren zum Halten der Temperatur von fluiden Medien in Rohren auch bei Fliessunterbruch der fluiden Medien, ein Rohr ummantelt mit dem Verfahren, ein passives Warmhaltesystem für Warmwasserleitungen und/oder Kalthaltesystem für Kaltwasserleitungen in Wohn- und Büro-Gebäuden sowie verfahrenstechnischen Anlagen, sowie die Verwendung des ummantelten Rohrs.

Wohn- und Büro-Gebäude sind in der Regel mit Kalt- und Warmwasserleitungen ausgestattet. Während die Temperatur des Kaltwassers in Kaltwasserleitungen typischerweise nicht eingestellt wird, muss das Warmwasser so erhitzt werden, dass es auch nach dem Transport in der Warmwasserleitung nach dem Öffnen des Warmwasserhahns als Warmwasser wahrgenommen wird. Da auch bei mehrstöckigen Gebäuden das Warmwasser oft zentral, beispielsweise im Keller, erhitzt und von dort im ganzen Haus verteilt wird, müssen die Warmwasserleitungen gut isoliert werden, um den Wärmeverlust während des Transports zu reduzieren.

Im Gebäudebereich wird warmes Wasser typischerweise pro Wasserentnahme höchstens einige Minuten gebraucht. Anschliessend kühlt sich das Wasser in der Warmwasserleitung trotz Wärmeisolation, d.h. Wärmedämmung, wieder ab. Deshalb dauert es beim Aufdrehen eines Warmwasserhahns oft einige Zeit, bis das ausfliessende Wasser warm wird. Um dem vorzubeugen, wird teilweise normativ vorgeschrieben, dass Warmwasserleitungen warmgehalten werden müssen, beispielsweise mittels eines Zirkulationssystems oder einer Rohrbegleitheizung.

Beim Zirkulationssystem wird mittels Zirkulationspumpe permanent nacherhitztes Warmwasser in einer zur Warmwasserleitung parallelen Leitung - beispielsweise in einer Doppelmantelleitung oder einer Rückführleitung - im Kreislauf gepumpt, um die Wassertemperatur der Warmwasserleitung auf der gewünschten Temperatur zu halten, auch wenn der Medienfluss für einige Zeit unterbrochen wird.

Bei der Rohrbegleitheizung wird ein elektrischer Widerstand, beispielsweise in Form eines Kabels oder elektrischen Heizbandes, um das Rohr gewickelt oder dem Rohr entlanggeführt. Durch Anlegen von elektrischer Spannung erwärmt sich das Kabel resp. Heizband und so wird das Rohr elektrisch beheizt. Dabei können auch Sensoren zur Temperaturkontrolle vorgesehen werden.

Das Zirkulationssystem, insbesondere mit Doppelmantelleitung oder Rückführleitung, und die elektrische Rohrbegleitheizung sind sogenannte aktive Warmhaltesysteme. Diese sind technisch aufwändig herzustellen und im Gebrauch sehr energie- und somit kostenintensiv, auch wenn kein Warmwasser verwendet wird. Sie haben zudem den Nachteil, dass bei Störungen der Leitungsführung (Kabelbruch, beispielsweise durch thermische Dehnungen der Rohrleitung, Alterung der Kabelisolierung etc.) Bauschäden entstehen können und die Funktion entlang der gesamten Leitung unterbrochen ist. Zudem besteht das Risiko, dass bei Bruch der elektrischen Rohrbegleitheizung die elektrische Spannung zu Glimmbränden führen und/oder beispielsweise über die metallische Rohrleitung auch an entfernten Stellen Personen gefährden oder anderweitig Schaden anrichten kann. Diese Systeme - und die elektrische Begleitheizung im Besonderen - verbrauchen sehr viel elektrische Energie, die zudem wesentlich wertvoller ist als Wärmeenergie. Deshalb sind sie nicht zuletzt aus Gründen des Umweltschutzes wenn immer möglich zu vermeiden.

Kaltwasserleitungen sollten aus hygienischen Gründen unter 25°C gehalten werden, da eine Erwärmung über 25°C zu einer Vermehrung von humanpathogenen Keimen, insbesondere den Legionellen, führen. Bei Wohn- und Büro-Gebäuden werden heutzutage jedoch Kaltwasserleitungen in Ermangelung von einfachen, geeigneten Lösungen aller Regel nicht gekühlt, wobei lediglich auf die niedrigen Temperaturen des Leitungswassers auf der Eingangsseite der Leitung zum Gebäude abgestützt wird.

Die Aufgabe der vorliegenden Erfindung ist daher ein passives Warmhaltesystem für Warmwasserleitungen und ein passives Kalthaltesystem für Kaltwasserleitungen in Wohn- und Büro-Gebäuden bereit zu stellen. Das passive Warmhaltesystem soll ermöglichen, dass die Wassertemperatur in Warmwasserleitungen ohne externe Energiezufuhr auch während Stunden nach einer Wasserentnahme warm bleibt. Und das passive Kalthaltesystem soll verhindern, dass die Wassertemperatur von Kaltwasser auch bei warmen Aussentemperaturen und während Stunden nach einer Wasserentnahme kalt bleibt, d.h. nicht über 25°C steigen. Dadurch soll das Legionellenwachstum in den Warm-/Kaltwasserleitungen verhindert werden. Zudem soll das passive Warm-/Kalthaltesystem auch auf der Baustelle gut und einfach zuschneidbar und vor Ort am Warm- oder Kaltwasserrohr einfach zu befestigen sein. Auch soll es möglich sein, das Warmhaltesystem problemlos mit einer Wärmedämmung zu versehen.

Die Aufgabe konnte überraschenderweise gelöst werden mit einem Verfahren nach Anspruch 1 zum Halten der Temperatur von fluiden Medien in Rohren auch bei Fliessunterbruch der fluiden Medien, wobei die Rohre für die Gebäude- und Haustechnik, den Hochbau sowie für chemische und verfahrenstechnische Anlagen geeignet sind, wobei
a) in einem ersten Schritt eine Wärmespeicherschicht (1) hergestellt wird umfassend mindestens ein Latentwärmespeichermaterial (2) und mindestens ein Matrix-Material (3), wobei, falls das Latentwärmespeichermaterial (2) im Matrix-Material (3) in mikroverkapselter Form vorliegt, das Matrix-Material (3) nicht ein Wärmedämmmaterial (5) ist, und
b) in einem zweiten Schritt die Wärmespeicherschicht (1) um ein Rohr (4) angeordnet wird und anschliessend das mit der Wärmespeicherschicht (1) bedeckte Rohr (4) mit Wärmedämmmaterial (5) in Form einer Rohrschale ummantelt wird und so ein ummanteltes Rohr (41) erhalten wird, wobei das Wärmedämmmaterial (5) eine Wärmeleitfähigkeit von ≤ 0.1 W/((m·K) aufweist.

Zudem wird auch ein ummanteltes Rohr (41) erhalten nach dem erfindungsgemässen Verfahren beansprucht.

Beansprucht wird auch ein passives Warmhaltesystem für Warmwasserleitungen und/oder Kalthaltesystem für Kaltwasserleitungen in Wohn- und Büro-Gebäuden sowie für chemische und verfahrenstechnische Anlagen umfassend mindestens ein erfindungsgemässes ummanteltes Rohr (41). Beansprucht wird auch die Verwendung des erfindungsgemässen ummantelten Rohrs (41) zum Warmhalten von fluiden Medien, insbesondere als Warmwasserleitung in Gebäuden, Wasserdampfleitungen, Leitungen zum Transport von Chemikalien, Bitumen, Silikonen, Schmelzklebstoffen, und/oder Lebensmitteln wie beispielsweise Schokolade, und/oder zum Kalthalten von fluiden Medien, insbesondere von fluiden Medien unter Druck, von Gasen und/oder Flüssigkeiten, insbesondere von Kühlflüssigkeiten, Chemikalien, Lösungsmittel mit hohem Dampfdruck und/oder Lebensmitteln wie beispielsweise Milchprodukte und Getränke.

Das erfindungsgemässe Verfahren, das erfindungsgemässe ummantelte Rohr (41), das passive Warmhaltesystem für Warmwasserleitungen und/oder Kalthaltesystem für Kaltwasserleitungen - nachfolgend abgekürzt mit Warm-/Kalthaltesystem für Warm-/Kaltwasserleitungen - in Wohn- und Büro-Gebäuden sowie in verfahrenstechnischen Anlagen und die erfindungsgemässen Verwendungen weisen überraschenderweise viele Vorteile auf. So kann auf einfache Art und Weise ein dauerhaft wirkendes passives Temperaturhaltesystem für - gegenüber der Umgebung - erhöhte oder erniedrigte Temperaturen, d.h. ein Warmhaltesystem resp. ein Kalthaltesystem, bereitgestellt werden, welches nicht nur für Warm- und/oder Kaltwasserleitungen in Wohn- und Büro-Gebäuden, sondern - je nach gewählter Phasenübergangstemperatur des Latentwärmespeichermaterials (2) - auch für höhere Temperaturen des fluiden Mediums, wie beispielsweise 125°C für Wasserdampfleitungen, eingesetzt werden kann. Denn sollte das fluide Medium nicht mehr gefördert werden, wodurch die Medium-Temperatur trotz der Wärmedämmung sinkt, gibt das Latentwärmespeichermaterial (2) durch die Phasenumwandlung von flüssig zu fest Schmelzenthalpie an die Umgebung und an das im Rohr (4) befindliche Medium ab. Dadurch wird bei optimaler Wärmeleitung der Rohrwand die Medium-Temperatur des Mediums im Rohr bei der Schmelztemperatur gehalten und sinkt erst, wenn im Wesentlichen alles Latentwärmespeichermaterial (2) gefroren ist, d.h. wenn der Phasenübergang von flüssig zu fest abgeschlossen ist. Dadurch kann passiv, d.h. ohne zusätzliche Energie Zu- resp. Abfuhr, die Temperatur des fluiden Mediums auch bei Fliessunterbruch des fluiden Mediums über eine längere Zeit - beispielsweise über Stunden - im Wesentlichen bei der Phasenwechseltemperatur des Latentwärmespeichermaterials (2) gehalten werden. Demzufolge kann mit dem erfindungsgemässen Warm-/Kalthaltesystem für Warm-/Kaltwasserleitungen insbesondere in Wohn- und Büro-Gebäuden sowie in verfahrenstechnischen Anlagen überraschenderweise auf die Energieintensiven Zirkulationssysteme und Rohrbegleitheizungen verzichtet werden. Zudem ist ein Nachrüsten bestehender Warm-/Kaltwasserleitungen mit dem erfindungsgemässen passiven Warm-/Kalthaltesystem jederzeit auf einfache Art und Weise möglich, insbesondere wenn die Warm-/Kaltwasserleitungen in einem - beispielsweise begehbaren - Leitungsschacht angeordnet sind. Das passive Kalthaltesystem für Kaltwasser erlaubt zudem das problemlose Kalthalten von Wasser in Kaltwasserleitungen, das bisher aus energetischer Sicht in der Regel nicht praktiziert wird. Durch die geringere Temperatur werden mögliche Krankheitskeime in Kaltwasserleitungen wesentlich langsamer vermehrt. Demzufolge weist das aus solchen Leitungen entnommene Wasser einen geringeren Anteil an Keimen auf, was ein positiver Gesundheitsaspekt darstellt.

Überraschenderweise können das erfindungsgemässe Verfahren, das erfindungsgemässe ummantelte Rohr (41), das passive Warm-/Kalthaltesystem für Warm-/Kaltwasserleitungen und die erfindungsgemässe Verwendungen bei geeigneter Auswahl des Latentwärmespeichermaterials (2) sowohl zum Halten der Temperatur von erhitzten resp. erwärmten fluiden Medien, beispielsweise Wasserdampfleitung oder Warmwasserleitungen in Gebäuden, wie auch von kalten fluiden Medien, beispielsweise bei Kälteanlagen, eingesetzt werden. Zudem sind das erfindungsgemässe ummantelte Rohr (41) und somit das passives Warm-/Kalthaltesystem für Warm-/Kaltwasserleitungen überraschenderweise sowohl werkseitig wie auch auf der Baustelle mit vor Ort üblicherweise vorhandenen Werkzeugen gut zuschneidbar.

Somit können aufgrund der vorliegenden Erfindung überraschenderweise und auf einfache, energiearme Art und Weise Temperaturen von fluiden Medien in Rohren über einen äusserst breit wählbaren Temperaturbereich auch über Stunden oder sogar Tage ohne Zu- oder Abfuhr von Energie, d.h. passiv und somit auch ohne Rezirkulation, ohne Doppelmantel und ohne elektrische Begleitheizung oder elektrisch betriebene Peltierelemente, im Wesentlichen bei der Phasenwechseltemperatur des eingesetzten Latentwärmespeichermaterials (2) gehalten werden, auch wenn das fluide Medium nicht mehr - oder nicht dauernd - fliesst.

Das erfindungsgemässe Verfahren und das erfindungsgemäss ummantelte Rohr (41) können somit gemäss den erfindungsgemässen Verwendungen überraschenderweise sehr vielseitig eingesetzt werden, wie beispielsweise bei Warmwasserleitungen in Gebäuden, bei Heizungs- und Kälteanlagen. Auch wird somit ein einfacher, energieeffizienter Temperaturschutz beispielsweise bei Störungen in Chemiebetrieben und/oder Pumpen von temperaturkritischen fluiden Medien bereitgestellt. Zudem kann das erfindungsgemäss ummantelte Rohr (41) auf einfache Art und Weise - typischerweise vor Ort - auf die benötigte Länge zugeschnitten werden, ohne dass daraus Latentwärmespeichermaterial (2) austritt - und dies auch bei Temperaturen, die oberhalb der Schmelztemperatur des Latentwärmespeichermaterials (2) liegen.

Die Wärmespeicherschicht (1) kann falls notwendig auf einfache Art und Weise zugeschnitten werden, auch ohne dass Latentwärmespeichermaterial (2) aus der Wärmespeicherschicht (1) - entweder alleine oder im Verbund mit dem Wärmedämmmaterial (5), und somit als nicht beanspruchter Wärme-Speicher-Dämm-Verbund (51) - aus der Wärmespeicherschicht (1) austritt. Mit anderen Worten: Die Wärmespeicherschicht (1) und der Wärme-Speicher-Dämm-Verbund (51) bluten nicht oder höchstens unwesentlich, auch wenn sie zugeschnitten werden.

Überraschenderweise erlaubt das erfindungsgemässe passive Warmhaltesystem für Warmwasserleitungen und/oder das erfindungsgemässe passive Kalthaltesystem für Kaltwasserleitungen in Wohn- und Büro-Gebäuden sowie für chemische und verfahrenstechnische Anlagen das Halten der Warm- resp. Kaltwassertemperatur über viele Stunden oder sogar Tage, ohne dass aktiv Energie zugeführt werden muss. Dies erlaubt eine deutliche Energiereduktion in Wohn- und Büro-Gebäuden sowie in chemischen und verfahrenstechnischen Anlagen. Zudem erlaubt die einfache und unterhaltsfreie Funktionsweise des passiven Warm-/Kalthaltesystems für Warm-/Kaltwasserleitungen auch den Einbau in Häusern und Gebäuden, in welchen bis anhin kein Warm-/Kalthaltesystem eingebaut wurde. Dies reduziert den Wasserverbrauch deutlich.

In der Literatur werden Pipelines, insbesondere Tiefsee Pipelines zur Förderung von Rohöl, welche u.a. mit einem Phasenwechselmaterial umgeben sind, vielfach beschrieben. Dabei dient das Phasenwechselmaterial zur Verlängerung der Abkühlzeit und zum Verhindern des Verfestigens des in der Pipeline fliessenden Mediums, insbesondere des Rohöls.

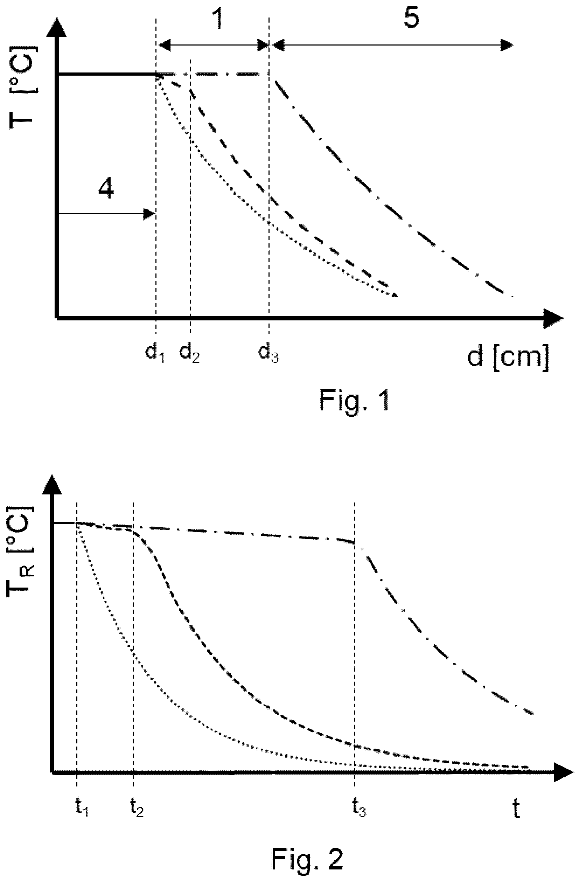

So beschreibt die US 6,000,438 eine Tiefseepipeline mit einer passiven Isolation mit verbesserten transienten Wärmeverlusteigenschaften. Die Pipeline ist mit einer Wärmedämmung ausgestattet, in welche ein dispergiertes oder mikroverkapseltes Phasenwechselmaterial eingearbeitet ist. Bei einem Förderunterbruch soll dadurch die Abkühlzeit der produzierten resp. geförderten Kohlenwasserstoff-Flüssigkeit stark verlängert werden. Nachteilig an Wärmedämmungen enthaltend dispergiertes oder mikroverkapseltes Phasenwechselmaterial ist die reduzierte Wärmedämmfunktion. Zudem dient nur derjenige Teil des Phasenwechselmaterials zur verlängerten Abkühlzeit, welcher im Bereich des geförderten Kohlenwasserstoffs, d.h. in der Nähe des Pipeline Rohrs, ist. Der grösste Anteil des in der Wärmedämmung enthaltenen Phasenwechselmaterials ist jedoch unterhalb der Phasenwechseltemperatur des Phasenwechselmaterials und kann daher die Abkühlzeit nicht verlängern. Hingegen wird aufgrund einer erhöhten Wärmeleitfähigkeit, die durch die Anwesenheit des wärmeleitenden Phasenwechselmaterials gegeben ist, die Wärmedämmung reduziert (Fig. 1 und 2).

Die WO-A-2011/161472 beschreibt ein passives Wärmemanagementsystem für Unterwasser-Pipelines um Flüssigkeiten wie Rohöl beispielsweise von einem Unterwasser-Bohrkopf weg zu transportieren. Dabei weist das Rohöl bei der Förderung eine Temperatur von etwa 50°C bis 90°C auf, während die Temperatur des Meerwassers in der Umgebung etwa 0°C beträgt. Wenn die Temperatur des Rohöls jedoch unter etwa 25°C fällt, kann es sich verfestigen und die Pipeline verstopfen. Deshalb umfasst das passive Wärmemanagementsystem ein Phasenwechselmaterial mit einem Schmelzpunkt der so gewählt wird, dass, wenn der Transport des Rohöls unterbrochen wird, die Wärme von der Phasenänderungsschicht auf das sich abkühlende Rohöl übertragen wird, wodurch sich das Rohöl länger in flüssigem Zustand befindet.

Die WO-A-2012/175994 bezieht sich auf eine Vorrichtung und ein Verfahren zum Aufrechterhalten der Temperatur insbesondere von Rohöl in einer Unterwasser-Pipeline. Dabei wird ein Material mit einer hohen Latentwärme bei Phasenänderung verwendet, um latente Wärme an das Fluid abzugeben, wenn die Fluidtemperatur in Richtung eines Schwellenwerts abnimmt. Das Material kann mit einem Isolierband ummantelt sein. Eine Matrix umfassend ein Matrix-Material und ein Phasenwechselmaterial sowie ein Wärmedämmmaterial sind nicht erwähnt.

Die WO-A-02/062918 beschreibt ein Verfahren zur Herstellung eines quasiunkomprimierbaren Phasenwechselmaterials mit scherverdünnenden Eigenschaften und einer niedrigen Wärmeleitfähigkeit. Dazu wird das Phasenwechselmaterial bestehend aus einer Mischung von ausgewählten chemischen Verbindungen in flüssiger Phase mit einem voluminösen Polymer als Texturierungsmittel vermischt. Durch das Texturierungsmittel erhält das Phasenwechselmaterial eine Gel-artige Konsistenz ohne Scherbeanspruchung, unter Scherbeanspruchung verflüssigt es sich jedoch wieder. Das gelierte Phasenwechselmaterial wird zur Wärmeisolation von Leitungen wie Kohlenwasserstoff Transportleitungen, insbesondere Tiefsee-Rohöl Pipelines, eingesetzt. Nicht erwähnt ist die Ummantelung solcher, mit geliertem Phasenwechselmaterial umhüllten, Leitungen mit Wärmedämmmaterial.

Die EP-A-2 712 893 beschreibt ein Verfahren zur Herstellung von Pipelines, insbesondere Off-Shore-Pipelines, mit wärmespeichernden Eigenschaften. Dabei wird ein organisches Polyisocyanat mit mindestens einer polymeren Verbindung mit mindestens zwei gegenüber Isocyanat reaktiven Wasserstoffatomen, einem Katalysator, Wachs und gegebenenfalls weiteren Zusatzstoffen zu einer Reaktionsmischung vermischt, auf ein Rohr aufgetragen und zu einer Polyurethanschicht ausreagiert. Wärmedämmmaterialien, insbesondere Wärmedämmmaterialien welche die Pipeline mit der ausreagierten Reaktionsmischung umschliessen, werden nicht erwähnt.

Die WO-A-02/16733 beschreibt eine Temperatursteuervorrichtung um die Bildung von Alkanhydraten in einer Unterwasser-Öl- und Gasproduktion, insbesondere bei einem Tiefsee-Eruptionskreuz (engl.: Subsea Christmas Tree), zu verhindern. Die Vorrichtung umfasst ein Gehäuse und ein Phasenwechselmaterial, welches im Gehäuse angeordnet ist. Das Phasenwechselmaterial weist eine Phasenübergangstemperatur auf, die höher ist als die Temperatur, bei welcher Alkan Hydrate gebildet werden. Dabei wird das Phasenwechselmaterial als solches eingesetzt ohne dass dieses in einer Matrix eingebettet oder verkapselt ist. Zudem sind Wärmedämmmaterialien nicht erwähnt.

Diese Vorrichtungen und Verfahren für Pipelines für Rohöl, insbesondere für die Tiefsee Rohölförderung, eignen sich nicht für Wohn- und Bürogebäuden sowie für oberirdische Leitungen. Denn Tiefsee-Pipelines und dazu verwendete Apparaturen müssen u.a. einem hohen Wasserdruck standhalten können und müssen sehr resistent sein gegen mechanische Beschädigung von aussen. Auch weisen Rohöl Pipelines einen komplexen Aufbau und wesentlich grössere Dimension auf als Wasserleitungen in Wohn- und Bürogebäuden. Zudem eignen sich Wärmedämmmaterialien, wie sie erfindungsgemäss eingesetzt werden, nicht für Tiefsee-Anwendungen, da sie aufgrund der auf die Wärmedämmmaterialien wirkenden Kräfte zerstört würden oder zumindest stark komprimiert würden, wodurch die Wärmedämmeigenschaften zerstört würden.

### Das Verfahren

Das erfindungsgemässe Verfahren dient zum Halten, d.h. Stabilisieren, der Temperatur von fluiden Medien in Rohren auch bei Fliessunterbruch der durch die Rohre fliessenden fluiden Medien, wobei die Rohre für die Gebäude- und Haustechnik, den Hochbau - und somit für Wohn- und Büro-Gebäude - sowie für chemische und verfahrenstechnische Anlagen geeignet sind und somit bevorzugt Teil der Gebäude- und Haustechnik, des Hochbaus und von chemischen und verfahrenstechnischen Anlagen sind. Somit bezieht sich das Verfahren auf oberirdische Leitungen, insbesondere von Wohn- und Bürogebäuden sowie von chemischen und verfahrenstechnischen Anlagen.

Das erfindungsgemässe Verfahren und das ummantelte Rohr (41) eignen sich nicht für Apparaturen und Pipelines der Erdöl- und Erdgas-Industrie und somit nicht zur Förderung von Rohöl, insbesondere nicht zur Tiefsee Rohöl Förderung.

Der Begriff fluide Medien, auch Fluid oder nur Medium genannt, umfasst erfindungsgemäss jegliche Medien, die bei der im Rohr herrschenden Temperatur zum Zeitpunkt des Transports fliessfähig und somit transportierbar sind. Nicht-limitierende Beispiele solcher fluiden Medien umfassen insbesondere Gase, Flüssigkeiten, Suspensionen, Slurries, Dispersionen, Emulsionen und/oder Mischungen davon. Im Sinne der Erfindung ist Rohöl jedoch als fluides Medium nicht bevorzugt.

In einem ersten Schritt a) des erfindungsgemässen Verfahrens wird eine Wärmespeicherschicht (1) hergestellt, wobei die Wärmespeicherschicht (1) mindestens ein Latentwärmespeichermaterial (2) und mindestens ein Matrix-Material (3) umfasst, wobei, falls das Latentwärmespeichermaterial (2) in mikroverkapselter Form vorliegt, das Matrix-Material (3) nicht ein Wärmedämmmaterial (5) ist.

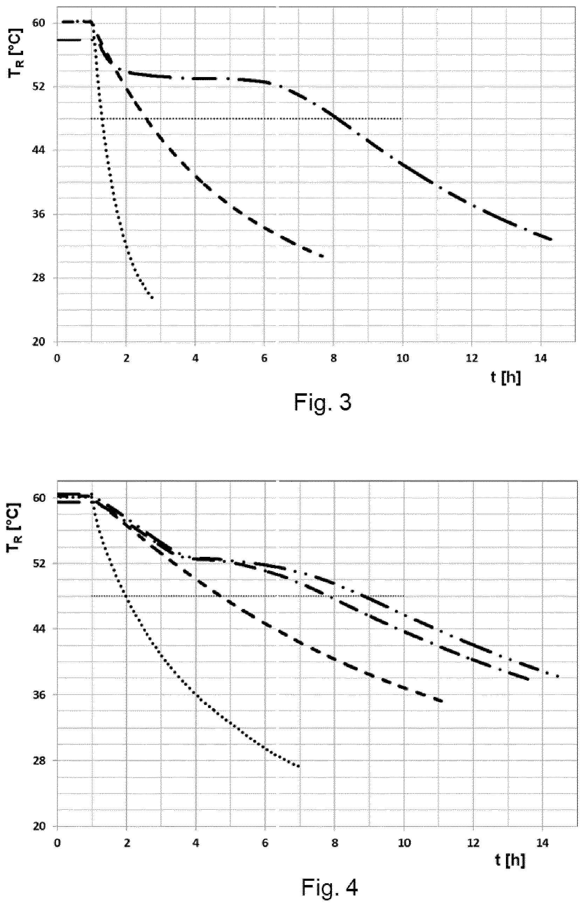

In der erfindungsgemässen Ausführungsform des zweiten Schritts b) des erfindungsgemässen Verfahrens wird die Wärmespeicherschicht (1) um das Rohr (4), beispielsweise in Form eines Bandes, angeordnet und gegebenenfalls befestigt. Dabei kann die Wärmespeicherschicht (1) das Rohr (4) vollständig oder nur teilweise bedecken. Die Befestigung der Wärmespeicherschicht (1) kann spiralförmig um das Rohr (4) erfolgen und/oder - beispielsweise in Form eines langgezogenen Rechtecks - um das Rohr (4) herum angebracht werden (Fig. 4). Die Breite des Rechtecks kann beispielsweise so gewählt werden, dass sie dem Umfang des Rohrs (4) entspricht und somit, wenn um das Rohr (4) gelegt, dieses vollständig umgibt. Es ist auch möglich, dass die Breite des Rechtecks kleiner als der Rohrumfang gewählt wird, sodass ein Teil des Rohrs nicht mit der Wärmespeicherschicht (1) ummantelt wird, und/oder dass zwei oder mehr Rechtecke der Wärmespeicherschicht (1) beispielsweise parallel zueinander auf die Rohroberfläche gelegt werden. Zudem ist es auch möglich, dass zwei oder mehr Wärmespeicherschichten (1) mit gleicher oder unterschiedlicher Zusammensetzung übereinandergelegt werden können. Anschliessend wird das mit der Wärmespeicherschicht (1) bedeckte Rohr (4) mit Wärmedämmmaterial (5), insbesondere mit Wärmedämmmaterial (5) mit einer geeigneten, das Rohr (4) mit Wärmespeicherschicht (1) optimal umfassenden, Profilierung, d.h. Ausnehmung, ummantelt, wodurch ein ummanteltes Rohr (41) erhalten wird.

In einer nicht beanspruchten Ausführungsform des Verfahrens wird zuerst die Wärmespeicherschicht (1) mit dem Wärmedämmmaterial (5) in Kontakt gebracht, wodurch ein Wärme-Speicher-Dämm-Verbund (51) erhalten wird, mit welchem anschliessend das Rohr (4) so ummantelt wird, dass die Wärmespeicherschicht (1) des Wärme-Speicher-Dämm-Verbunds (51) zwischen dem Rohr (4) und dem Wärmedämmmaterial (5) des Wärme-Speicher-Dämm-Verbunds (51) zu liegen kommt. Die Wärmespeicherschicht (1) kann die ganze oder nur einen Teil der inneren Schicht des Wärmedämmmaterials (5) umfassen (Fig. 3). Auch ist es möglich, nur einen Teil, beispielsweise nur eine Hälfe, einer mehrteiligen Rohrschale mit einer Wärmespeicherschicht (1) auszurüsten. Dabei ist das Wärmedämmmaterial (5) bevorzugt mit einer Profilierung, d.h. Ausnehmung versehen, wobei die Wärmespeicherschicht (1) in dieser Profilierung angeordnet wird. Die Profilierung des Wärmedämmmaterials (5) wird typischerweise so gewählt, dass sie das Rohr (4) und die Wärmespeicherschicht (1) optimal umfassen.

Das Latentwärmespeichermaterial (2) der Wärmespeicherschicht (1) wird vorteilhafterweise so gewählt, dass der Schmelzpunkt, d.h. die Phasenwechsel- oder Phasenübergangstemperatur fest/flüssig, des Latentwärmespeichermaterials (2) etwas, d.h. typischerweise 1°C bis 5°C, von der Temperatur des im Rohr befindenden und geförderten fluiden Mediums abweicht. Ist die Medium-Temperatur - typischerweise bei warmgehaltenen fluiden Medien - höher als die Umgebungstemperatur, so ist der Schmelzpunkt vorteilhafterweise niedriger als die Temperatur des geförderten Mediums. Und wenn die Medium-Temperatur - typischerweise bei gekühlten fluiden Medien - niedriger ist als die Umgebungstemperatur, so ist der Schmelzpunkt des Latentwärmespeichermaterials (2) vorteilhafterweise oberhalb der Temperatur des geförderten Mediums.

Bei Warmwasserleitungen in grösseren Gebäuden beträgt die Soll-Wassertemperatur beispielsweise 55°C. Wird der Warmwasserfluss gestoppt, kühlt sich das Warmwasser nur mit einer Wärmedämmung und ohne Warmhaltesystem ab. Wird nun ein Latentwärmespeichermaterial (2) mit einem Schmelzpunkt von 50 bis 54°C - beispielsweise Diphenylamin mit einem Schmelzpunkt von 52.9°C oder ein Paraffin mit 24 Kohlenstoffatomen von 50.6°C - eingesetzt, weist das Ganze in der Wärmespeicherschicht (1) vorhandene Latentwärmespeichermaterial (2) eine Temperatur auf, die oberhalb dessen Schmelzpunkt liegt. Dementsprechend liegt das Latentwärmespeichermaterial (2) in geschmolzenem, d.h. flüssigem, Aggregatszustand vor. Wird nun der Warmwasserfluss unterbrochen, kühlt sich das Warmwasser etwas ab. Sobald die Temperatur des Warmwassers jedoch in den Bereich der Schmelztemperatur des Latentwärmespeichermaterials (2) kommt, erstarrt ein Teil des Latentwärmespeichermaterials (2), wodurch Schmelzenthalpie freigesetzt wird. Diese wiederum wird an die Umgebung und an das Warmwasser abgegeben. Dies verhindert ein weiteres Abkühlen und stabilisiert die Temperatur des Warmwassers im Bereich der Schmelztemperatur des Latentwärmespeichermaterials (2). Dieser Vorgang dauert so lange, bis alles Latentwärmespeichermaterial (2) erstarrt ist. Dadurch kann auch durch die Wahl der Schichtdicke der Wärmespeicherschicht (1), der Art und der Menge des Latentwärmespeichermaterials (2) in der Wärmespeicherschicht (1) und der Art und Dicke des Wärmedämmmaterials (5) die Zeitdauer bestimmt werden, während derer das Warmwasser auf der gewünschten Temperatur gehalten werden soll. Bei der nächsten Warmwasser Entnahme wärmt das durchfliessende Warmwasser das erstarrte Latentwärmespeichermaterial (2), wodurch dieses wieder schmilzt und somit für den nächsten Zyklus aktiviert wird.

Bei einer Kälteanlage, in welcher ein gekühltes fluides Medium durch das Rohr (4) fliesst, ist die Umgebungstemperatur grösser als die Temperatur des fluiden Mediums. Weist letzteres eine Temperatur von z.B. -23°C auf, kann ein Latentwärmespeichermaterial (2) beispielsweise mit einem Schmelzpunkt von -16°C bis -21°C eingesetzt werden. Nicht-limitierende Beispiele sind Ethylenglykol mit einem Schmelzpunkt von -16°C oder eine wässrige Calciumchlorid, CaCl₂, Lösung von -21.3°C. Somit liegt in dieser Anordnung alles Latentwärmespeichermaterial (2) in erstarrter Form vor. Wird nun der Fluss des fluiden Mediums der Kälteanlage gestoppt, erwärmt sich das gekühlte Medium bis zur Schmelztemperatur des Latentwärmespeichermaterials (2). Dringt nun von aussen über die Wärmedämmung weiter Wärme in Richtung Rohr (4), wird zunächst das Latentwärmespeichermaterial (2) geschmolzen. Während diesem Prozess bleibt das gekühlte fluide Medium weiterhin konstant gekühlt, bis alles Latentwärmespeichermaterial (2) geschmolzen ist. Bei geeigneter Wahl der Schichtdicke der Wärmespeicherschicht (1), der Art und der Menge des Latentwärmespeichermaterials (2) in der Wärmespeicherschicht (1) und der Art und Dicke des Wärmedämmmaterials (5) kann somit die Zeitdauer bestimmt werden, während derer das gekühlte fluide Medium auf der gewünschten Temperatur gehalten werden soll. Wird der Unterbruch behoben, kühlt das durchfliessende kalte fluide Medium das geschmolzene Latentwärmespeichermaterial (2), wodurch dieses wieder erstarrt und somit für einen nächsten Unterbruch aktiviert wird.

Beim Transport von Fluiden im Siedezustand und bei Temperaturen unterhalb der Umgebungstemperatur führt ein Unterbruch des Fluidtransports zum Verdampfen der Flüssigkeit und somit zu einer schnellen Druckerhöhung und zu sicherheitskritischen Zuständen. Mit dem erfindungsgemässen Verfahren, dem erfindungsgemäss ummantelten Rohr (41), dem nicht beanspruchten Wärme-Speicher-Dämm-Verbund (51) und dem passiven Warm-/Kalthaltesystem für Warm-/Kaltwasserleitungen wird dieser Effekt um eine längere Zeit verhindert, während welcher die Störung in der Regel behoben werden kann. Dadurch kann das Ansprechen von Sicherheitsventilen oder Berstscheiben in den meisten Fällen verhindert werden. Insbesondere für moderne Kältemaschinen mit natürlichen Kältemitteln wie Pentan, Butan, Propan, Ammoniak und/oder CO₂ ist dies von Bedeutung, denn die Fluide werden bei Temperaturen nahe an deren Siedepunkt betrieben.

Auch werden thermische Netze im Niedertemperaturbereich zunehmend mit CO₂ betrieben, bei welchen zwischen Wärmequelle und Senke mit der vorliegenden Erfindung wesentlich leistungsfähigere und energieeffizientere Rohrleitungsdämmungen installiert werden können.

Der Fachmann kann aufgrund von bekannten, öffentlich zugänglichen Daten und gegebenenfalls anhand seines Fachwissens geeignete Latentwärmespeichermaterialien (2), deren Anteil in der Wärmespeicherschicht (1), die notwendige Schichtdicke der Wärmespeicherschicht (1) sowie die Art und Dicke des optimalen Wärmedämmmaterials (5) bestimmen.

### Die Wärmespeicherschicht (1)

Die Wärmespeicherschicht (1) liegt bevorzugt in Form einer flächigen Schicht mit typischerweise gleichmässiger Schichtdicke vor. Bei Temperaturen oberhalb des Schmelzpunkts des Latentwärmespeichermaterials (2) ist die Wärmespeicherschicht (1) typischerweise flexibel und somit bieg- und formbar.

Die Schichtdicke der Wärmespeicherschicht (1) kann im Wesentlichen beliebig gewählt und an die spezifischen Anforderungen angepasst werden. **In** vielen Fällen reicht jedoch schon eine Schichtdicke der Wärmespeicherschicht (1) von etwa 0.1 bis 20 cm, bevorzugt von etwa 0.15 bis 10 cm, insbesondere von etwa 0.2 bis 5 cm, gemessen mit einem Messschieber nach DIN 862, insbesondere mit einem Messschieber nach DIN 862 mit Nonius Form A1, aufweist.

Die Wärmespeicherschicht (1) des erfindungsgemässen Verfahrens und des nicht beanspruchten Wärme-Speicher-Dämm-Verbunds (51) umfasst mindestens ein Latentwärmespeichermaterial (2) und mindestens ein Matrix-Material (3), wobei, falls das Latentwärmespeichermaterial (2) in mikroverkapselter Form vorliegt, das Matrix-Material (3) nicht ein Wärmedämmmaterial (5) ist.

Das Latentwärmespeichermaterial (2) ist im Matrix-Material (3) eingebunden. Somit ermöglicht das Matrix-Material (3), dass das Latentwärmespeichermaterial (2) auch im flüssigen Zustand an Ort und Stelle bleibt und somit nicht wegfliesst. Dadurch wird auch verhindert, dass das Latentwärmespeichermaterial (2) als Flüssigkeit an die Oberfläche der Wärmespeicherschicht (1) gelangt, d.h. das Bluten, auch Schwitzen genannt, der Wärmespeicherschicht (1) wird deutlich reduziert oder sogar ganz verhindert.

In einer bevorzugten Ausführungsform wird die Menge an Latentwärmespeichermaterial (2) in der Wärmespeicherschicht (1) so gewählt, dass die Wärmekapazität (einschliesslich der Phasenwechselenthalpie) fest/flüssig der Wärmespeicherschicht (1) innerhalb eines Temperaturbereichs von 10 K mindestens 50 kJ, bevorzugt mindestens 80 kJ, insbesondere mindestens 120 kJ, pro kg Wärmespeicherschicht (1) und gemessen mittels DSC nach EN ISO 11357-1 und -4, beträgt. Dem Fachmann ist bekannt, wie er diese Menge ohne erfinderische Tätigkeit bestimmen kann. Die Menge an Latentwärmespeichermaterial (2) ist insbesondere abhängig von der gewünschten Schmelztemperatur der Wärmespeicherschicht (1), des gewählten Latentwärmespeichermaterials (2) und der Wärmekapazität des fluiden Mediums. Das verwendete Matrix-Material (3) trägt in der Regel wenig zur Wärmekapazität der Wärmespeicherschicht (1) bei.

In einer anderen bevorzugten Ausführungsform besteht die Wärmespeicherschicht (1) im Wesentlichen aus 30 bis 95 Gew.-%, bevorzugt 40 bis 90 Gew.-%, insbesondere 50 bis 85 Gew.-%, Latentwärmespeichermaterial (2), 5 bis 70 Gew.-%, bevorzugt 10 bis 60 Gew.-%, insbesondere 15 bis 50 Gew.-%, Matrix-Material (3), und 0 bis 20 Gew.-%, bevorzugt 0 bis 15 Gew.- %, insbesondere 0 bis 10 Gew.-%, weiteren Komponenten.

Eine bevorzugte weitere Komponente der Wärmespeicherschicht (1) umfasst mindestens ein Keimbildungsadditiv in einer vorteilhaften Menge von 0.1 bis 10 Gew.-%, bevorzugt von 0.2 bis 6 Gew.-%, insbesondere von 0.3 bis 5 Gew.-%, bezogen auf die Gesamtmenge des eingesetzten Latentwärmespeichermaterials (2). Geeignete Keimbildungsadditive sind dem Fachmann bekannt. Nicht-limitierende Beispiele umfassen Siliziumdioxid, Kieselsäure, Nanopartikel, Metalloxidpartikel von Eisen, Kupfer und/oder Aluminium, und/oder Carbon Nanotubes.

### Die Schicht (11)

Gemäss der Erfindung ist mindestens eine Seite der Wärmespeicherschicht (1) - vollflächig oder nur ein Teil der Fläche - von einer Schicht (11) bedeckt, wobei die Schicht (11) bevorzugt eine Papierschicht, eine Kunststoff-Folie, insbesondere eine Polyethylen-, PE-, Polypropylen-, PP-, Polystyrol-, PS-, Polyethylenterephthalat-, PET- und/oder Kunststoff-Laminat-Folie, einer Metall-Folie, insbesondere eine Aluminium-, Kupfer-, Zinn-, Zink- und/oder Stahl-Folie, eine Metall-Kunststoff-Schicht, und/oder ein Laminat umfasst. Dabei kann die Schicht (11) auch mittels Fasern, insbesondere Glasfasern, Carbonfasern und/oder Kunststofffasern, verstärkt sein kann.

Umfasst die dem fluiden Medium zugewandte Seite der Wärmespeicherschicht (1) eine Schicht (11), ist diese bevorzugt eine wärmeleitende Schicht (11). Umfasst die dem fluiden Medium abgewandte Seite der Wärmespeicherschicht (1) eine Schicht (11), ist diese bevorzugt eine nichtwärmeleitende Schicht (11). Unter wärmeleitender Schicht (11) wird verstanden, dass die Schicht (11) eine Wärmeleitfähigkeit von ≥ 10 W/(m K) aufweist. Bevorzugt, nicht-limitierende Beispiele geeigneter wärmeleitenden Schichten (11) sind Metallfolien wie beispielsweise Aluminiumfolie, Kupferfolien, Zinn-, Zink- und/oder Stahl-Folie. Bevorzugte, nicht-limitierende Beispiele geeigneter nicht-wärmeleitenden Schichten (11) sind Kunststofffolien wie beispielsweise PE-Folien, PP-Folien und/oder PET-Folien.

Vorteilhafterweise weist die Schicht (11) eine Schichtdicke von 0.001 mm bis 2 cm, bevorzugt von 0.002 mm bis 1 cm, insbesondere von 0.003 mm bis 0.5 cm, gemessen mit einem Messschieber nach DIN 862, insbesondere mit einem Messschieber nach DIN 862 mit Nonius Form A1. Falls die Schichtdickenmessung mit Messschieber aufgrund zu geringer Schichtdicke nicht möglich ist, d.h. wenn die Standardabweichung des Mittelwerts von 5 Messungen mehr als 30% des Mittelwerts beträgt, wird die Schichtdicke mit einem Ultraschalldickenmessgerät bestimmt.

### Die Komposite (13, 14, 15, 16)

In einer besonders bevorzugten Ausführungsform stellt die Wärmespeicherschicht (1) im Wesentlichen, d.h. insbesondere zu mindestens 80 Gew.-%, bezogen auf die Wärmespeicherschicht (1) einen Komposit, insbesondere einen Komposit (13, 14, 15, 16) dar.

In einer bevorzugten Ausführungsform i) stellt die Wärmespeicherschicht (1) im Wesentlichen einen Komposit (13) dar, wobei wird der Komposit (13) durch Erwärmen, Mischen und Abkühlen mindestens eines Latentwärmespeichermaterials (2), mindestens eines Matrix-Materials (3) und gegebenenfalls mindestens eines Keimbildungsadditivs erhalten. Solche Komposite (13) sind dem Fachmann bekannt und in der Literatur, beispielsweise in der WO-A-2009/118344, beschrieben. Sie können beispielsweise mittels Extrusion hergestellt, anschliessend gegebenenfalls granuliert und weiter beispielsweise zu einer flächigen Wärmespeicherschicht (1) oder zu Fasern weiterverarbeitet werden. Die Fasern können beispielsweise zur Herstellung von Vliesen und/oder Geweben verwendet und in dieser Form als Komposit (13) in der Wärmespeicherschicht (1) eingesetzt werden.

In einer bevorzugten Ausführungsform ii) stellt die Wärmespeicherschicht (1) im Wesentlichen einen Komposit (14) dar, wobei der Komposit (14) das Latentwärmespeichermaterial (2) umfasst, welches auf dem Matrix-Material (3) sorbiert, d.h. adsorbiert und/oder absorbiert, ist. Dabei ist stellt das Matrix-Material (3) bevorzugt ein Vlies, ein Gewebe und/oder ein flächiges poröses Material dar, wobei das Vlies und/oder Gewebe gegebenenfalls Fasern umfassen kann, die aus dem Komposit (13) hergestellt sind. Auch kann das Vlies und/oder Gewebe Hohlfasern umfassen, in welchen Latentwärmespeichermaterial (2) angeordnet, d.h. beispielsweise gefüllt, adsorbiert und/oder absorbiert, ist. Geeignete Vliese, Gewebe und flächige poröse Materialien sind dem Fachmann bekannt. Ein nicht-limitierendes Beispiel eines flächigen porösen Materials ist eine dünne poröse Metallschicht, beispielsweise gesintertes Metall.

In einer bevorzugten Ausführungsform iii) stellt die Wärmespeicherschicht (1) im Wesentlichen einen Komposit (15) dar, wobei der Komposit (15) ein Pulver und/oder Granulat (151) umfasst, welches mit mindestens einem Matrix-Material (3), insbesondere einem Klebstoff, und gegebenenfalls auch mit mindestens einer Schicht (11), verbunden ist. Das Pulver und/oder Granulat (151) liegt bevorzugt als mikroverkapseltes Latentwärmespeichermaterial (2) vor und/oder das Latentwärmespeichermaterial (2) ist auf porösem pulver- und/oder granulatförmigem Trägermaterial sorbiert, d.h. adsorbiert und/oder absorbiert. Im Sinne der Erfindung wird das Trägermaterial sowie das Kapselmaterial als Matrix-Material (3) betrachtet.

Die Herstellung von mikroverkapselten Latentwärmespeichermaterialien (2) ist bekannt und im Handel erhältlich.

Geeignete poröse pulver- und/oder granulatförmige Trägermaterialien zur Herstellung des Pulvers und/oder Granulats (151) des Komposits (15) sind dem Fachmann bekannt. Auch ist die Ad- und Absorbtion von Latentwärmespeichermaterialien (2) auf Pulver und/oder Granulat (151) bekannt. Diese erfolgt bevorzugt bei Temperaturen oberhalb des Schmelzpunkts des jeweiligen Latentwärmespeichermaterials (2). Das Pulver und/oder Granulat (151) kann zusammen mit dem darin enthaltenen Latentwärmespeichermaterials (2) auch beispielsweise mit einem Polymerfilm überzogen werden, um zusätzlich zu verhindern, dass Latentwärmespeichermaterial (2) in flüssigem Zustand desorbiert.

Ein geeignetes und besonders bevorzugtes Matrix-Material (3) um die Pulver und/oder Granulate (151) des Komposits (15) miteinander zu verbinden, ist ein Klebstoff, mit welchem die Pulver und/oder Granulate (151) zusammengehalten, d.h. fixiert, werden. Beispielsweise können die Pulver und/oder Granulate (151) auf eine Schicht (11) aufgebracht werden und anschliessend mit dem Klebstoff verklebt werden. Gegebenenfalls kann darüber mit dem Klebstoff eine weitere Schicht (11) angebracht werden. Der Klebstoff kann ein Ein-, Zwei- oder Mehrkomponenten Klebstoff und somit gegebenenfalls ein reaktiver Klebstoff sein. Geeignete Klebstoffe sind dem Fachmann bekannt.

In einer bevorzugten Ausführungsform iv) stellt die Wärmespeicherschicht (1) im Wesentlichen einen Komposit (16) dar, wobei der Komposit (16) das Latentwärmespeichermaterial (2) und einen Verdicker, umfasst, wobei der Komposit (16) typischerweise in Form einer hochviskosen Flüssigkeit, eines Gels, Pulvers, Granulats, Schuppen und/oder Paste vorliegt. Besonders geeignete Latentwärmespeichermaterialien (2) des Komposits (16) umfassen Wasser und wässrige Mischungen und/oder wässrige Lösungen.

Einige der Verdicker können zusätzliche als Keimbildner für das Latentwärmespeichermaterial (2) wirken. Ein Beispiel hierzu ist SiO₂.

Geeignete Verdicker sind solche Verdicker, die auf das jeweilige Latentwärmespeichermaterial (2) abgestimmt sind und umfassen organische und anorganische Verdicker. Dem Fachmann sind geeignete Verdicker bekannt und kann auch eine geeignete, auf das jeweilige Latentwärmespeichermaterial (2) optimal abgestimmte Auswahl treffen.

In einer anderen besonders bevorzugten Ausführungsform v) umfasst die Wärmespeicherschicht (1) im Wesentlichen, d.h. insbesondere zu mindestens 80 Gew.-%, bezogen auf die Wärmespeicherschicht (1), eine Vielzahl, d.h. 2 oder mehr, von Kammern aus Matrix-Material (3), wobei die Kammern Latentwärmespeichermaterial (2) enthalten, d.h. die Kammern sind bevorzugt mit dem Latentwärmespeichermaterial (2) gefüllt. Dabei liegt das Latentwärmespeichermaterial (2) bevorzugt in reiner Form, als Pulver und/oder Granulat (151), als Komposit (13, 14, 15, 16) und/oder als Mischungen von zwei oder mehr Komposits (13, 14, 15, 16) vor. Die Kammern können beispielsweise auf einer Seite offen sein, sodass sie leicht befüllt werden können, wobei mit einer anschliessend angebrachten Schicht (11) die Kammern bedeckt werden können.

### Das Latentwärmespeichermaterial (2)

Das Latentwärmespeichermaterial (2) der Wärmespeicherschicht (1) speichert die Phasenübergangsenthalpie resp. gibt diese an das fluide Medium ab. Somit nutzen die Latentwärmespeichermaterialien (2) den Phasenwechsel von fest zu flüssig um Wärme aufzunehmen oder den Phasenwechsel von flüssig zu fest um Wärme abzugeben. Dabei steht der Begriff Phasenübergangsenthalpie, auch Phasenwechselenthalpie genannt, für die Schmelz- resp. die Erstarrungsenthalpie des Phasenübergangs fest/flüssig resp. flüssig/fest.

Unter Phasenwechsel wird erfindungsgemäss der Wechsel des Aggregatzustandes von fest zu flüssig, d.h. das Schmelzen, resp. von flüssig zu fest, d.h. das Erstarren oder Gefrieren, verstanden. Erfindungsgemäss werden Schmelzen, Erstarren und Gefrieren als Synonyme verwendet. Alle Phasenwechsel weisen in der Regel die gleiche Enthalpie auf, wobei der Absolutwert, d.h. der Betrag, des Enthalpiewerts relevant ist. Auch werden sie als Synonyme verwendet.

Unter Phasenwechseltemperatur wird für den Phasenübergang von fest zu flüssig die Schmelztemperatur und für den Phasenübergang von flüssig zu fest die Erstarrungs- oder Gefriertemperatur verstanden. Diese genannten Temperaturen weisen in der Regel den gleichen Wert auf und werden als Synonyme verwendet. Falls das Latentwärmespeichermaterial (2) einen Phasenwechseltemperaturbereich aufweist, wird unter Phasenwechseltemperatur die arithmetisch gemittelte Temperatur des Temperaturbereichs verstanden. Ist diese nicht eindeutig ermittelbar, wird unter Phasenwechseltemperatur die Temperatur verstanden, bei welcher die Enthalpie Aufnahme einer DSC Messung ihr Maximum erreicht. Im Sinn der Erfindung ist somit der Schmelztemperaturbereich als Schmelztemperatur und der Erstarrungstemperaturbereich als Erstarrungstemperatur zu verstehen.

Als Latentwärmespeichermaterialien (2), auch Phasenwechselmaterialien oder Phase Change Materials, abgekürzt mit PCM, genannt, sind erfindungsgemäss Materialien, die eine Phasenwechsel Enthalpie festflüssig von mindestens 120 kJ/kg Latentwärmespeichermaterial (2) innerhalb eines Phasenwechseltemperaturbereichs von 5 K aufweisen. Phasenwechsel Enthalpien geeigneter Substanzen sind dem Fachmann aus der Literatur bekannt. Bei Fehlen entsprechender Enthalpie-Werte kann die Phasenwechsel Enthalpie mittels DSC nach EN ISO 11357-1 und -4 gemessen werden.

In einer bevorzugten Ausführungsform weist das Latentwärmespeichermaterial (2) einen Schmelzpunkt zwischen -182°C und +175°C, bevorzugt zwischen -80°C und +150°C, insbesondere zwischen -25°C und +125°C, auf. So kann beispielsweise Methan mit einem Schmelzpunkt von -182°C als Latentwärmespeichermaterial (2) verwendet werden, um Sauerstoff, das bei Normaldruck einen Siedepunkt von -182°C besitzt, zu kühlen und bei Ausfall des Kühlsystems vor dem Verdampfen zu schützen. Denn wenn der Sauerstoff einen etwas höheren Druck aufweist, steigt entsprechend auch der Siedepunkt, beispielsweise auf -180°C. Wird Methan als Latentwärmespeichermaterial (2) verwendet, ist es vorteilhaft, wenn das Methan beispielsweise an einem Trägermaterial bei Raumtemperatur adsorbiert und gegebenenfalls verkapselt ist, um das Verdampfen des Methans zu verhindern. Auch kann ein Rohr (4) eine Wasserdampfleitung umfassen, in welcher Wasserdampf mit beispielsweise einer Temperatur von 125°C gefördert wird. Hierzu wird vorteilhafterweise ein Latentwärmespeichermaterial (2) verwendet, welches eine Phasenwechseltemperatur um 120°C bis 123°C aufweist. Ein nicht-limitierende Beispiel eines hierzu geeigneten Latentwärmespeichermaterials (2) ist Benzoesäure mit einem Schmelzpunkt von 121.7°C.

In einer anderen bevorzugten Ausführungsform umfasst das Latentwärmespeichermaterial (2) mindestens eine organische Verbindung, insbesondere ein Kohlenwasserstoff, Paraffin, Alkohol, Glykol, Polyol, Zucker, Keton, Ester, Ether, Carbonsäure, Fettsäure, Amid, eine Schwefel-, Phosphor- und/oder Stickstoff-Verbindung, und/oder eine anorganische Verbindung, insbesondere ein anorganisches Salz, Salzhydrat, Wasser und/oder eine wässrige Mischung. Dem Fachmann sind geeignete Latentwärmespeichermaterialien (2) bekannt und vielseitig in der Literatur, beispielsweise im VDI Wärmeatlas, 10. Auflage, Springer Verlag beschrieben.

Bevorzugte, nicht-limitierende Beispiele umfassen C₁₄- bis C₃₄- Paraffine mit Schmelzpunkten zwischen 5.5 und 75.9°C und einer Schmelzenthalpie von etwa 200 bis 269 kJ/kg, wie beispielsweise Hexadecan mit einem Schmelzpunkt von 18.3°C und einer Schmelzenthalpie von 210 kJ/kg, Ethylenglykol, welches einen Schmelzpunkt von -12.9°C und einer Schmelzenthalpie von 160 kJ/kg aufweist, Wasser mit einem Schmelzpunkt von 0°C und einer Schmelzenthalpie von 333.6 kJ/kg, wässrige Mischungen wie beispielsweise eine Glykol-Wassermischung, mit welcher bei optimalem Mischverhältnis, d.h. ca. 70 Gew.-% Glykol und 30 Gew.-% Wasser, ein Gefrierpunkt von -56°C und eine Schmelzenthalpie von 212 kJ/kg erhalten werden kann, oder Wasser-Salzmischungen, wobei das Salz Natriumchlorid, Calciumchlorid und/oder Kaliumchlorid sein kann, Metallsalze wie beispielsweise Natrium Silikat Pentahydrat, Na₂SiO₃ · 5H₂O mit einem Schmelzpunkt von 72.2°C und einer Schmelzenthalpie von 267 kJ/kg, Myristinsäure mit einem Schmelzpunkt von 54°C und einer Schmelzenthalpie von 199 kJ/kg.

### Das Matrix-Material (3)

Das Matrix-Material (3) der Wärmespeicherschicht (1) bildet eine Matrix, d.h. ein Gebilde, welches verhindert, dass das Latentwärmespeichermaterial (2) in flüssiger, d.h. geschmolzener, Form - und auch gegebenenfalls in pulver- und/oder granulatförmiger Form - wegfliesst. Deshalb ist es in der Regel vorteilhaft, wenn das Matrix-Material (3) bei Raumtemperatur und typischerweise auch bis mindestens 10°C, bevorzugt bis mindestens 25°C, insbesondere bis mindestens 50°C, oberhalb der Phasenübergangstemperatur des darin eingebundenen Latentwärmespeichermaterials (2) in im Wesentlichen fester Form vorliegt.

**In** einer bevorzugten Ausführungsform stellt das Matrix-Material (3) ein synthetisches und/oder natürliches Polymer dar, insbesondere ein Polymer auf Basis olefinischer Monomere wie Acrylate, Styrol und/oder Olefine wie beispielsweise Polymethylacrylat, Styrol(co)polymere, Polyethylen und/oder Polypropylen, ein Block-Copolymer wie Block-Copolymere umfassend Styrol und/oder Ethylen, ein Kondensationspolymer, insbesondere Polyester, Polyamid und/oder Polyethylenterephthalat, ein Biopolymer, insbesondere ein Protein, ein Polysaccharid, und/oder eine Naturfaser, ein Trägermaterial, ein Verdicker und/oder ein Klebstoff. Demzufolge ist das Matrix-Material (3) - zum Zeitpunkt wenn es mit dem Latentwärmespeichermaterial (2) vermischt wird - ein ausreagiertes Polymer, und somit typischerweise dem ausgesetzten Umfeld gegenüber chemisch inert.

Gemäss den besonders bevorzugten Ausführungsformen i), ii), iii) iv) und v) und den Komposits (13, 14, 15, 16) kann ein Matrix-Material (3) oder eine Vielzahl von unterschiedlichen Matrix-Materialien (3) eingesetzt werden.

Bevorzugt geeignete Matrix-Materialien (3) für die Ausführungsformen i) und ii) umfassen Acrylate und Methacrylate wie beispielsweise Polymethylmethacrylat, PMMA, Polyethylen, LDPE, HDPE, Polypropylen, Polyethylenterephthalat, Polystyrol, Blockpolymere wie beispielsweise Styrol-Butadien-Block-Copolymer, Styrol-Polybutadien-Block-Copolymer, Styrol-Isopren-Block-Copolymer, Styrol-Polyisopren-Block-Copolymer, Styrol-Ethen-Buten-Styrol-Block-Copolymerisat (SEBS), Styrol-[Ethylen-(Ethylen-Propylen)]-Styrol-Block-Copolymer (SEEPS), Polyamide, Polyester, Cellulose, Silikate, Glasfasern, Gewebe wie Glasgewebe und/oder Vliese.

Bevorzugt geeignete Matrix-Materialien (3) für die Ausführungsformen iii) umfassen Trägermaterialien und Klebstoffe. Nicht-limitierende Beispiele geeigneter Trägermaterialien umfassen Blähton, Blähglas, Aerosil, Kieselsäure, expandiertes Vermiculit, amorphes Siliziumdioxid, Bims, Blähschiefer, Perlite, Flugasche und/oder organische Pulver und/oder Granulate wie beispielsweise poröse Polysaccharide wie Stärkeether und/oder Cellulosefasern. Nicht-limitierende Beispiele geeigneter Klebstoffe umfassen organische Klebstoffe wie wasserbasierte Klebstoffe, beispielsweise Dispersionsklebstoffe auf Basis von Vinylacetat oder EthylenVinylacetat, Polyacrylat Klebstoffe, Polyurethan Klebstoffe, Epoxy-Härter Klebstoffe, Schmelzklebstoffe, insbesondere reaktive Schmelzklebstoffe, und/oder anorganische Klebstoffe wie Wasserglas, Gips und/oder Zement.

Es wird bemerkt, dass poröse Materialien sowohl als Wärmedämmmaterial (5) als auch als Trägermaterial beispielsweise zur Herstellung eines Komposits (15) der Ausführungsform iii) oder als Verdicker zur Herstellung eines Komposits (15) der Ausführungsform iv) eingesetzt werden können. Diese Materialien wie beispielsweise Blähton, Aerosil und/oder amorphes Siliziumdioxid eignen sich als Wärmedämmmaterialien (5), sofern deren Poren mit Gas, insbesondere mit Luft, gefüllt sind. Füllt jedoch eine Flüssigkeit oder ein Feststoff diese Poren aus, verlieren sie die Wärmedämm-Eigenschaften. Allerdings entfalten sie dann ihre Wirkung als Trägermaterial resp. als Verdicker.

Bevorzugt geeignete Matrix-Materialien (3) für die Ausführungsform iv) umfassen organische und anorganische Verdicker. Nicht-limitierende Beispiele geeigneter Verdicker - insbesondere für Wasser und wässrige Systeme - sind Acrylatverdicker, vernetzte Polyacrylsäuren, Assoziative Verdicker, Polysaccharidverdicker wie beispielsweise Stärkeether, Celluloseether, Guarether, Carrageen, Johannisbrotkernmehl, Pektine, Xanthan, Polyvinylalkohol, Polyvinylacetat, Silikate, Siliziumdioxid, SiO₂, Aerogele, Silikagele, Aerosile, Bentonit, Hektorit und/oder Carbon-Nanotubes. Für organische Latentwärmespeichermaterialien (2) können auch hydrophob modifizierte Verdicker wie hydrophobe organische Polymere und/oder hydrophobes SiO₂ verwendet werden.

Geeignete Matrix-Materialien (3) für die Kammern der Ausführungsform v) umfassen Polymethylmethacrylat, PMMA, Polyethylen, LDPE, HDPE, Polypropylen, Polyethylenterephthalat, Polystyrol, Blockpolymere wie beispielsweise Styrol-Butadien-Block-Copolymer, Styrol-Polybutadien-Block-Copolymer, Styrol-Isopren-Block-Copolymer, Styrol-Polyisopren-Block-Copolymer Styrol-Ethen-Buten-Styrol-Block-Copolymerisat (SEBS) und/oder Styrol-[Ethylen-(Ethylen-Propylen)]-Styrol-Block-Copolymer (SEEPS).

### Das Rohr (4)

Das Rohr (4) des erfindungsgemässen Verfahrens ist typischerweise ein im Handel erhältliches und auch in herkömmlichen Verfahren einsetzbares Rohr. Der Begriff Rohr (4) umfasst erfindungsgemäss auch Schläuche, d.h. flexible und biegsame Rohre, beispielsweise ein Kunststoffschlauch. Das Rohr (4) kann eine glatte oder gewellte oder anderweitig profilierte Oberfläche aufweisen. Somit sind Wellrohrschläuche aus Kunststoff und/oder Metall mitumfasst.

Der Durchmesser des Rohrs (4) richtet sich nach dem Einsatzgebiet und der Menge des geförderten fluiden Mediums. Bei kleineren Kältegeräten kann es ein dünnes Rohr mit einem Durchmesser von beispielsweise 1 cm oder weniger sein. Unter dem Begriff Rohr (4) werden auch Rohrleitungen resp. Leitungen, verstanden, sofern sie zum Fördern von fluiden Medien im Sinne der Erfindung geeignet sind.

Das Rohr (4) ist bevorzugt ein aus im Wesentlichen einer Materialart hergestelltes Rohr und somit typischerweise aus einer Schicht bestehendes Rohr. Demzufolge besteht das Rohr (4) bevorzugt nicht aus einer Vielzahl von unterschiedlichen Schichten aus verschiedenen Materialien, wie beispielsweise in der WO-A-2011/161472 oder der WO-A-2012/175994 offenbart.

Im Sinne der Erfindung umfasst das Rohr (4) nicht Pipelines oder Rohre für die Erdöl- oder Erdgas-Industrie.

In einer bevorzugten Ausführungsform ist das Rohr (4) ein Glasrohr, ein Metallrohr, insbesondere ein Messingrohr, Stahlrohr, Edelstahlrohr, Aluminiumrohr, und/oder Kupferrohr, und/oder ein Kunststoffrohr, insbesondere ein Rohr aus PVC, PET, Acrylglas, Polyurethan, Polycarbonat, Polybutadien, Polypropylen, Polyethylen und/oder Verbundwerkstoffen.

Geeignete Rohre (4) für Warmwasser in der Gebäudetechnik, beispielsweise für mehrstöckige Mehrfamilienhäuser, weisen typischerweise einen Innendurchmesser von etwa 0.5 cm bis etwa 50 cm, insbesondere von etwa 1 cm bis etwa 35 cm auf. Dabei werden die Innendurchmesser bevorzugt mit einem Messschieber nach DIN 862, insbesondere mit einem Messschieber nach DIN 862 mit Nonius Form A1, gemessen.

Das Rohr (4) kann einen beliebigen Querschnitt aufweisen. In vielen Fällen ist der bevorzugte Querschnitt ein runder Querschnitt. Er kann aber auch oval, elipsoid, eckig, beispielsweise 4-eckig und/oder kantig sein. Ist das Rohr beispielsweise spiralförmig angeordnet, kann auch die ganze Spirale so ummantelt werden, als wenn der Gesamtdurchmesser der Spirale der Durchmesser des Rohrs (4) wäre. Es ist auch möglich - und vielfach bevorzugt - wenn die im Rohr (4) fliessenden fluiden Medien unter Druck sind, d.h. dass sie einen Druck von grösser als 1 bar aufweisen, beispielsweise Wasser in Wasserleitungen wie Warmwasser, Gase in Kühlaggregaten oder Wasserdampf in Dampfleitungen.

Wird das Rohr (4) gemäss Verfahrensschritt b1) zuerst mit der Wärmespeicherschicht (1) und anschliessend mit Wärmedämmmaterial (5) oder mit dem Wärme-Speicher-Dämm-Verbund (51) ummantelt, wird das nach dem erfindungsgemässen Verfahren erhältliche ummantelte Rohr (41) erhalten.

### Das Wärmedämmmaterial (5)

Das Wärmedämmmaterial (5) dient zur Wärmedämmung sowohl der Wärmespeicherschicht (1) wie auch des Rohrs (4) und des darin befindenden fluiden Mediums. Somit wird der Temperaturausgleich mit der Umgebungstemperatur wesentlich verlangsamt. Die Wärmedämmung ist jedoch ungeeignet für den Zweck der Wärmespeicherung, da die Wärmekapazität der Wärmedämmmaterialien (5) in aller Regel zu gering ist.

Die Wärmedämmmaterialien (5) weisen eine Wärmeleitfähigkeit von ≤ 0.1 W/(m·K), bevorzugt ≤ 0.07 W/(m·K), insbesondere ≤ 0.04 W/(m·K), auf.

Die optimale Schichtdicke des Wärmedämmmaterials (5) hängt von der spezifischen Anwendung und den individuellen Bedürfnissen ab und der Fachmann kann problemlos die geeignete Wahl treffen.

Oft ist es hilfreich, wenn das Wärmedämmmaterial (5) das Rohr (4) und die Wärmespeicherschicht (1) vollständig umschliesst.

Geeignete Wärmedämmmaterialien (5) sind dem Fachmann bekannt. Bevorzugte, nicht-limitierende Wärmedämmmaterialien (5) umfassen expandiertes Polystyrol (EPS), extrudiertes Polystyrol (XPS), Polyurethan (PUR), Polyisocyanurat (PIR), Phenolharz (PF), flexibler Elastomerschaum (FEF), Polyethylenschaum (PEF), Harnstoff-Formaldehydharzschaum (UF), PVC-Hartschaum, Polyurethan-Spritzdämmung, Kautschuk wie natürlicher Kautschuk oder synthetischer Kautschuk wie beispielsweise Styrol-Butadien-Kautschuk (SBR) oder Ethylen-Propylen-Dien-Kautschuk (EPDM), Mineralfaser, Mineralschaum, Mineralwolle (MW), Steinwolle, Glaswolle, Schaumglas (CG), Blähton, Perlit und Blähperlit (EPB), Vermiculit und expandiertes Vermiculit, Porenbeton, Holzfaser-Dämmplatte (WF), Holzwolle-Dämmplatte (WW), Zellulosedämmstoff (CI), Kork, Korkschrot, Korkplatte und Korkdämmplatte (ICB), Mikroporöser Dämmstoff, Aerogel, Vakuumisolationspaneel (VIP), Vakuumdämmung und/oder Dämmstoffe tierischen und/oder pflanzlichen Ursprungs, wie Dämmplatten aus Schafswolle, Schilfrohrplatten, Kokosfasermatten und/oder Flachsfaserplatten basiert, wobei insbesondere EPS, PU, PIR, Elastomer, Kautschuk, Styrol-Butadien-Kautschuk (SBR), Ethylen-Propylen-Dien-Kautschuk (EPDM), FEF, Stein, Glaswolle, Glasschaum und/oder Mineralschaum bevorzugt sind.

In einer Ausführungsform sind insbesondere geschäumte Wärmedämmmaterialien (5) bevorzugt, wobei expandierte oder extrudierte organische Polymere ganz besonders bevorzugt sind.

Das Wärmedämmmaterial (5) und der nicht beanspruchte Wärme-Speicher-Dämm-Verbund (51) können zudem in der Verkleidung, d.h. in der äusseren Schicht, auch eine Dampfsperre aufweisen.

Die Schichtdicke des Wärmedämmmaterials (5) kann im Wesentlichen beliebig gewählt und an die spezifischen Anforderungen angepasst werden. In vielen Fällen eignen sich Schichtdicke des Wärmedämmmaterials (5) von etwa 0.2 bis 40 cm, bevorzugt von etwa 0.5 bis 20 cm, insbesondere von etwa 0.5 bis 10 cm, gemessen mit einem Messschieber nach DIN 862.

### Der Wärme-Speicher-Dämm-Verbund (51; nicht beansprucht)

Der nicht beanspruchte Wärme-Speicher-Dämm-Verbund (51) wird erhalten, indem die Wärmespeicherschicht (1) mit dem Wärmedämmmaterial (5) in Kontakt gebracht, d.h. verbunden, wird. Er ist insbesondere geeignet für die Gebäude- und Haustechnik. Der Wärme-Speicher-Dämm-Verbund (51) kann aber aufgrund von Dimensionen, die das Ummanteln von Rohren (4) mit bestimmten Durchmessern erlauben, auch für chemische und verfahrenstechnische Anlagen, insbesondere auf dem Gebiet der Spezialitätenchemie, eingesetzt werden.

In einer bevorzugten Ausführungsform weist das Wärmedämmmaterial (5) eine Profilierung, d.h. Aussparung, auf, aufgrund welcher das Wärmedämmmaterial (5) auf einfache Art und Weise um das Rohr (4) gelegt werden kann. Wird diese Aussparung etwas, d.h. im Wesentlichen um die Schichtdicke der Wärmespeicherschicht (1), vergrössert, kann die Wärmespeicherschicht (1) in diese Aussparung eingelegt und vorteilhafterweise befestigt, d.h. eingeklemmt, angeschraubt, genagelt, fixiert, und/oder geklebt werden, wodurch der nicht beanspruchte Wärme-Speicher-Dämm-Verbund (51) erhalten wird. Somit liegt der Wärme-Speicher-Dämm-Verbund (51) in Form einer verschliessbaren Rohrschale vor, die gegebenenfalls mit einer Folie, insbesondere einer Faser-verstärkten Schutzfolie umgeben sein kann.

Der nicht beanspruchte Wärme-Speicher-Dämm-Verbund (51), insbesondere wenn er in Form einer Rohrschale vorliegt, wird vorteilhafterweise werkseitig hergestellt. Damit kann das Rohr (4) vor Ort, beispielsweise auf der Baustelle, so ummantelt werden, dass die Wärmespeicherschicht (1) des Wärme-Speicher-Dämm-Verbunds (51) zwischen dem Rohr (4) und dem Wärmedämmmaterial (5) des Wärme-Speicher-Dämm-Verbunds (51) zu liegen kommt. Demzufolge eignet sich der Wärme-Speicher-Dämm-Verbund (51) auch sehr gut zum nachträglichen Ausrüsten von bestehenden, fest installieren Rohren (4) und Leitungen.

### Das passive Warm-/Kalthaltesystem für Warm-/Kaltwasserleitungen

Das erfindungsgemässe passive Warmhaltesystem für Warmwasserleitungen und/oder Kalthaltesystem für Kaltwasserleitungen, d.h. für das Warm-/Kalthaltesystem für Warm-/Kaltwasserleitungen, umfasst mindestens ein erfindungsgemäss ummanteltes Rohr (41). Es ist besonders geeignet für Rohre für die Gebäude- und Haustechnik, den Hochbau sowie für chemische und verfahrenstechnische Anlagen.

In einer bevorzugten Ausführungsform weist das passive Warmhaltesystem kein Zirkulationssystem mit Zirkulationspumpe und somit auch keine Rückführleitungen auf.

In einer anderen bevorzugten Ausführungsform muss beim passivem Warm-/Kalthaltesystem keine externe Energie zu- und/oder abgeführt werden um zu funktionieren. Mit anderen Worten: Die im Warmwasser enthaltene Energie reicht aus, um dem Latentwärmespeichermaterial (2) die notwendige Schmelzenthalpie zu zuführen, um dieses zu erwärmen und zu schmelzen, und somit zu "aktivieren". Bei einem Fliessunterbruch des Warmwassers wird die im Latentwärmespeichermaterial (2) gespeicherte Energie über eine längere Zeitdauer ans Wasser abgegeben, wodurch das Wasser im Rohr während Stunden, beispielsweise über 7 Stunden oder mehr, über einem definierten Grenzwert bleibt. Dabei muss bei Fliessunterbruch keine zusätzliche Energie hinzugefügt werden. Auch ist kein Zirkulationssystem notwendig, um das Warmwasser genügend warm zu halten. Und das Kaltwasser kann schnell und auf einfache Art und Weise die im Latentwärmespeichermaterial (2) gespeicherte Energie, d.h. die Schmelzenthalpie, abführen und somit zu "aktivieren". Bei einem Fliessunterbruch des Kaltwassers muss mittels der Wärmezufuhr von aussen zuerst die Schmelzenthalpie wieder zugeführt werden, wodurch das Latentwärmespeichermaterial (2) zu schmelzen beginnt. Dieser Prozess dauert bei geeigneter Dimensionierung Stunden, wobei während dieser Zeit das Wasser gekühlt bleibt. Auch hier muss bei Fliessunterbruch keine Energie hinzugefügt werden, um das Wasser zu kühlen.

In einer bevorzugten Ausführungsform des passiven Warmhaltesystems für Warmwasserleitungen wird ein Latentwärmespeichermaterial (2) mit einer Phasenwechseltemperatur von bevorzugt etwa 40°C bis 70°C, insbesondere von etwa 50°C bis 60°C, eingesetzt. Ein geeignetes, nicht-limitierendes Latentwärmespeichermaterial (2) umfasst Myristinsäure mit einem Schmelzpunkt von 54°C und einer Schmelzenthalpie von 199 kJ/kg.

In einer bevorzugten Ausführungsform des passiven Kalthaltesystems für Kaltwasserleitungen wird ein Latentwärmespeichermaterial (2) mit einer Phasenwechseltemperatur von bevorzugt etwa -10°C bis 20°C, insbesondere von etwa -2°C bis 18°C, eingesetzt. Geeignete, nicht-limitierende Latentwärmespeichermaterialien (2) umfassen Hexadecan mit einem Schmelzpunkt von 18°C und einer Schmelzenthalpie von 210 kJ/kg sowie Tetradecan mit einem Schmelzpunkt von 6°C und einer Schmelzenthalpie von 225 kJ/kg

Als Matrix-Materialien (3) zur Herstellung der Wärmespeicherschicht (1) eignet sich jedes erwähnte Matrix-Material (3).

Als Wärmedämmmaterial (5) - zur Herstellung eines geeigneten, nicht beanspruchten Wärme-Speicher-Dämm-Verbunds (51) und/oder zum erfindungsgemässen Ummanteln des mit einer Wärmespeicherschicht (1) bedeckten Rohrs (4) - eignen sich die obgenannten Wärmedämmmaterialien (5), wobei geschäumte Wärmedämmmaterialien (5) besonders bevorzugt, und expandierte oder extrudierte organische Polymere ganz besonders bevorzugt sind.

In einer bevorzugten Ausführungsform des passiven Warm-/Kalthaltesystems für Warm-/Kaltwasserleitungen beträgt beim erfindungsgemäss ummantelten Rohr (41) das Verhältnis der Schichtdicke des Wärmedämmmaterials (5) zur Schichtdicke der Wärmespeicherschicht (1) bevorzugt von etwa 40 : 1 bis etwa 0.5 : 1, bevorzugt von etwa 20 : 1 bis etwa 1 : 1, insbesondere von etwa 10 : 1 bis etwa 2: 1. So weist eine geeignete Ausführungsform des Rohrs (41) beispielsweise eine Wärmespeicherschicht (1) umfassend das Latentwärmespeichermaterial (2) eine Schichtdicke von 10 mm und das Wärmedämmmaterial (5) eine Schichtdicke von 30 mm auf. In einer anderen beispielhaften Ausführungsform weist die Wärmespeicherschicht (1) eine Schichtdicke von 5 mm und das Wärmedämmmaterial (5) eine Schichtdicke von 50 mm auf.

### Beispiel 1: Herstellung einer Wärmespeicherschicht (1)

Als Matrix-Material (3) wurden 100 g granulatförmiges Polymethylmethacrylat (PMMA) und 150 g granulatförmiges Styrol-Ethen-Buten-Styrol-Block-Copolymerisat (SEBS, Hersteller Kraton Polymers Inc.) miteinander vermengt und in der ersten Zone, d.h. der Vorlaufzone, eines handelsüblichen Doppelschneckenextruders bei 250°C während 2 Minuten vorgemischt.

In einem 2.5 lt. Gefäss wurden als Latentwärmespeichermaterial (2) 740 g Paraffin mit einem Schmelzpunkt von 31 °C (RT31 der Firma Rubitherm) und 1 g hydrophobe, pyrogene Kieselsäure SiO₂ (Siliciumdioxid, Evonik) als Keimbildner und Verdicker bei 50°C mit einem handelsüblichen Dispergiergerät (Rotor-Stator-Stabhomogenisator von IKA) während 5 Minuten bei einer Scherrate von 20'000 s⁻¹ miteinander vermischt und dispergiert. Anschliessend wurden sie dem Extruder in der zweiten Zone zugegeben und mit den Polymeren des Matrix-Materials (3) während 3 Minuten bei 250°C PCM vermischt. Das Extrudat wird anschliessend in einem Wasserbad abgekühlt und auf eine mittlere Partikelgrösse von 3 mm, gemessen mittels Sieb, granuliert.

Eine grössere Menge des Granulats wurde in einem Extruder der Firma Coperion Typ ZSK-MC-18 bei T = 250°C und einer Verweilzeit von 2 Min eine flächige Wärmespeicherschicht (1) mit einer Schichtdicke von 5 mm und einer Breite von 0.5 m gezogen. Zur besseren Handhabung wurden anschliessend beide Seiten mit einer Aluminiumfolie kaschiert und die Wärmespeicherschicht (1) zugeschnitten.

Die so erhaltene Wärmespeicherschicht (1) ist beispielsweise bei Temperaturen von 20°C, also deutlich unterhalb des Schmelzpunkts des eingesetzten Paraffins, relativ unflexibel, d.h. mit etwas Druck lässt sie sich plastisch leicht verformen. Wird jedoch die Wärmespeicherschicht (1) - und somit alles Paraffin, d.h. die ganze Menge an Latentwärmespeichermaterial (2) - auf beispielsweise 40°C erwärmt, also deutlich oberhalb des Schmelzpunkts des eingesetzten Paraffins, ist das Granulat wie auch die daraus hergestellte Wärmespeicherschicht (1) elastisch verformbar. An den Schnittkanten lässt sich das Paraffin zwar erfühlen, aber auch durch Druck auf das Granulat resp. die Wärmespeicherschicht (1) mit geschmolzenem Paraffin bei 40°C dringt kein Paraffin nach aussen. Somit blutet das Granulat wie auch die Wärmespeicherschicht (1) auch bei geschmolzenem Paraffin auch bei Anwendung von Druck nicht aus. Die so erhaltene Wärmespeicherschicht (1) umfassend 74 Gew.-% Latentwärmespeichermaterial (2) weist eine Wärmekapazität, gemessen mittels DSC nach EN ISO 11357, von 140 kJ/kg Wärmespeicherschicht (1) auf.

### Beispiel 2: Herstellung eines ummantelten Rohrs (41)

Die in Beispiel 1 hergestellte flächige Wärmespeicherschicht (1) mit einer Schichtdicke von 5 mm, einer Breite von 0.5 m und beidseitiger Aluminiumkaschierung wurde in Streifen mit einer Breite von 2 cm geschnitten. Mit einem Wärmespeicherschichtstreifen wurde ein Edelstahlrohr mit einem Aussendurchmesser von 5.4 cm in einem Winkel von ca. 45° ummantelt. Bei den Streifen-Enden wurde mit einem weiteren Streifen die Ummantelung fortgesetzt. Dabei wurden wahlweise die Enden der Streifen an das Rohr geklebt und/oder mittels Klebeband umwickelt, um die Wärmespeicherschicht-Streifen am Rohr zu fixieren.

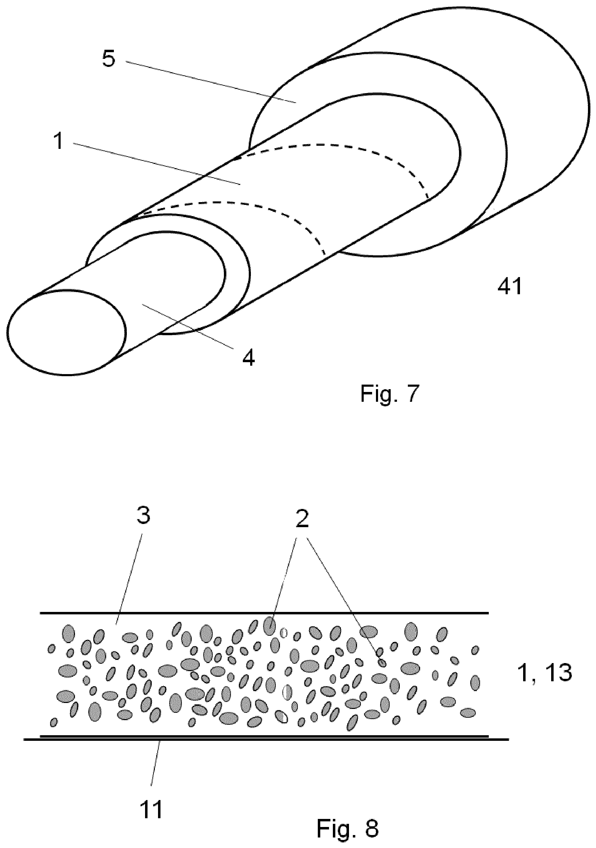

In einem nachfolgenden Schritt wurde das so mit der Wärmespeicherschicht (1) bedeckte Rohr (4) mit Wärmedämmmaterial (5) in Form einer Rohrschale ummantelt, wobei die Rohrschale in Form eines Polyisocyanurat Schaums (PIR-Schaums) vorlag. Die Rohrschale weist einen Innendurchmesser von 6.4 cm, eine Schichtdicke von 5 cm und einer Wärmeleitfähigkeit von 0.027 W/(m·K) auf. An der in Längsrichtung angeordneten Öffnung der Rohrschale weist diese vorteilhafterweise eine selbstklebende Schicht auf, mit welcher die Rohrschale anschliessend verschlossen wird. Der Aufbau eines so ummantelten Rohrs (41), das mit einer Rohrschale aus Wärmedämmung (5) umschlossen ist, ist beispielhaft in Fig. 7 dargestellt.

### Beispiel 3: Herstellung eines ummantelten Rohrs (41)

Beispiel 2 wurde wiederholt, wobei als Rohr (4) ein Rohr in Form eines handelsüblichen Gummischlauchs mit einem Aussendurchmesser von 5 cm eingesetzt wurde. Zudem wurde als Wärmedämmmaterial (5) eine Rohrschale in Form eines flexiblen PU-Schaums mit einer Schichtdicke von 5 cm verwendet.

Das so erhaltene ummantelte Rohr (41), d.h. der so ummantelte Gummischlauch, weist selbst bei Temperaturen von deutlich unterhalb der Schmelztemperatur des in der Wärmespeicherschicht (1) vorhandenen Latentwärmespeichers (2) eine vergleichbar hohe Flexibilität auf wie ohne die Wärmespeicherschicht (1).

### Beispiel 4: Herstellung eines Wärme-Speicher-Dämm-Verbunds (51) und Ummantelung des Rohrs (4) (nicht beansprucht)

Beispiel 2 wurde wiederholt, wobei als Latentwärmespeichermaterial (2) anstelle des Paraffins die gleiche Menge Myristinsäure mit einem gemessenen Schmelzpunkt von etwa 53°C und Schmelzenthalpie von 199 kJ/kg eingesetzt wurde. Die so hergestellte flächige Wärmespeicherschicht (1) mit einer Schichtdicke von 10 mm, einer Breite von 0.5 m und beidseitiger Aluminiumkaschierung wurde in Streifen geschnitten, wobei die Breite so gewählt wurde, dass damit das auszukleidende Wärmedämmmaterial (5) innen vollflächig ausgekleidet werden konnte. Als Wärmedämmmaterial (5) um das Rohr mit Aussendurchmesser 2.2 cm wurde eine aufklappbare, zweiteilige Rohrschale aus PIR-Schaum mit einer Schichtdicke von 5 cm und einem Aussendurchmesser von 14.2 cm verwendet (siehe Fig. 3, linke Hälfte). Mit dem so erhaltenen, nicht beanspruchten Wärme-Speicher-Dämm-Verbund (51) wurde ein Edelstahlrohr mit einer Wandstärke von 1.2 mm und einem Aussendurchmesser von 2.2 cm umhüllt.

### Beispiel 5: Bestimmung des Temperaturverhaltens des passiven Warm-/Kalthaltesystems mit Warm-/Kaltwasserleitungen bei Fliessunterbruch

In einer Klimakammer mit konstanten Raumtemperaturen wurde eine Versuchsanordnung aufgebaut um das Temperaturverhaltens des passiven Warm-/Kalthaltesystems mit Warm-/Kaltwasserleitungen bei Fliessunterbruch zu bestimmen. Für die Versuche mit Wassertemperatur von 60°C wurde ein Raumklima von 21°C (beheizter Raum im Winter) und für die Versuche mit Wassertemperatur von 12°C wurde ein Raumklima von 26 °C (Sommertemperatur) eingestellt.

Die Versuchsanordnung umfasst eine Test- und Messstrecke von 3 m Länge aus einem linearen, horizontal angeordneten Edelstahlrohr, dessen Enden an einem Thermostaten angeschlossen wurden. Die Fluid-Temperatur wurde mit dem Thermostaten exakt eingestellt und gehalten, wobei als Fluid Trinkwasser verwendet wurde. Die benötigten Verbindungsleitungen vom Thermostaten zum Rohr und zurück wurden minimiert und optimal mit Wärmedämmmaterial isoliert.

Für die Versuche mit Warmwasser, d.h. mit einer Wassertemperatur von 60°C, wurde sowohl ein Rohr mit einem Aussendurchmesser von 22 mm und einer Wandstärke von 1.2 mm, als auch ein Rohr mit einem Aussendurchmesser von 54 mm und einer Wandstärke von 1.5 mm eingesetzt. Für die Versuche mit Kaltwasser, d.h. mit einer Wassertemperatur von 12 bis 13°C, wurde ein Rohr mit einem Aussendurchmesser von 22 mm und einer Wandstärke von 1.2 mm verwendet. Die Edelstahlrohre wurden - in Anlehnung an Beispiel 4 - mit einem unterschiedlichen, nicht beanspruchten Wärme-Speicher-Dämm-Verbund (51) ummantelt. Als Wärmedämmmaterial (5) des Wärme-Speicher-Dämm-Verbunds (51) wurde eine swissporKISODUR PIR-Schale mit einer Wärmeleitfähigkeit von 0.027 W/(m.K), einer spezifischen Wärmekapazität von 1.4 kJ/(kg.K) und einer Rohdichte 32 kg/m³ eingesetzt. Die jeweilige Zusammensetzung findet sich in den Fussnoten zur Tabelle 1. Zudem wurden Vergleichsversuche mit Standardwärmedämmung wie auch vollständig ohne Wärmedämmung durchgeführt.

Entlang der Teststrecke wurden im Inneren des Edelstahlrohres in regelmässigen Abständen vier Temperatursensoren angebracht zur Bestimmung der Wassertemperatur im Rohr, wobei nachfolgend nur die gemittelte Temperatur der beiden mittleren Temperatursensoren angezeigt wird.

Die Versuchsanordnung wurde vor jedem Versuch genügend lange zirkuliert, um sicher zu stellen, dass das ganze Latentwärmespeichermaterial (2) in flüssigem (für Warmwasser) resp. In festem (für Kaltwasser) Zustand vorliegt.

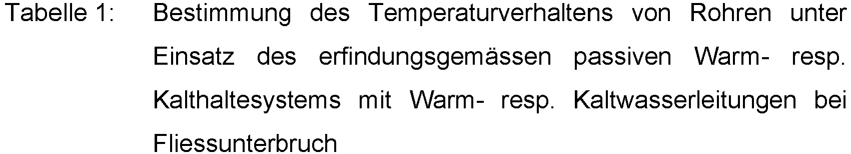

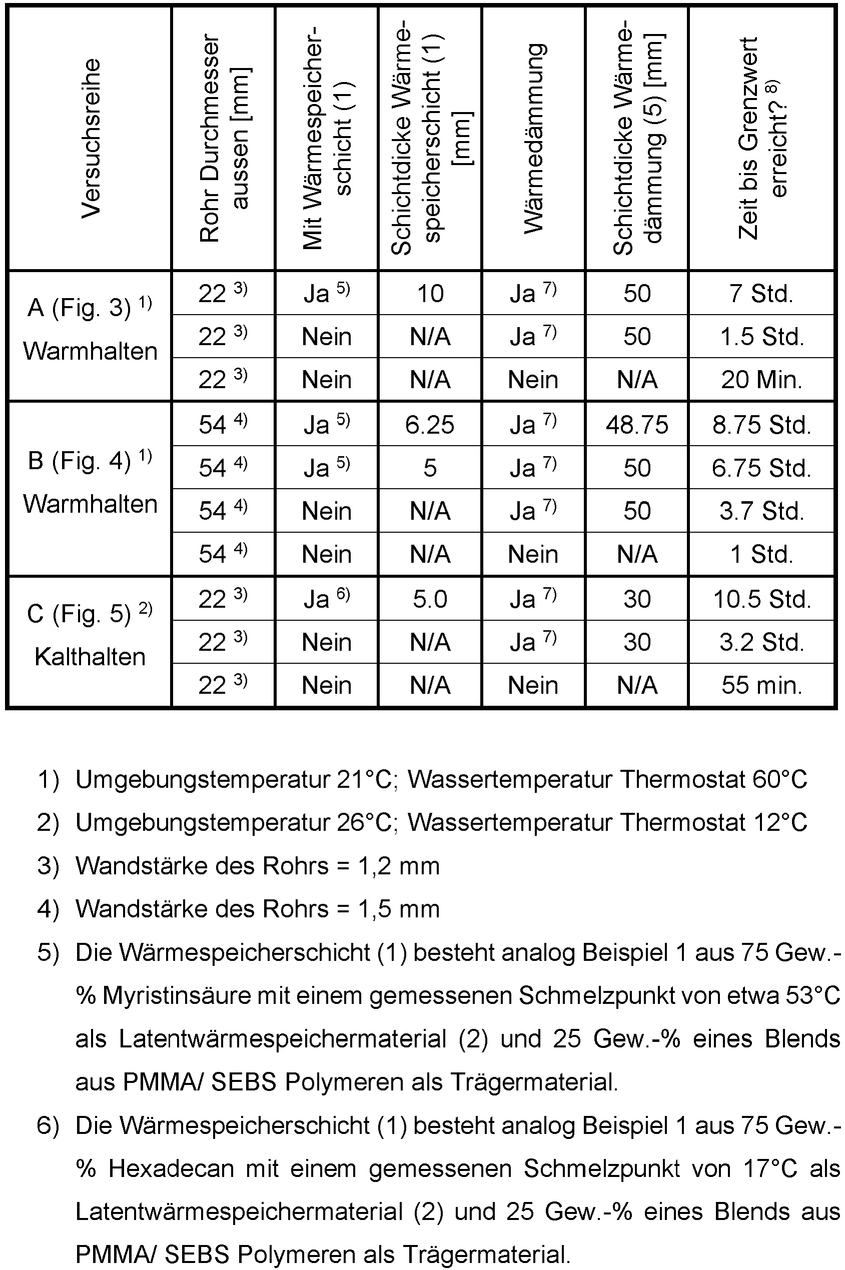

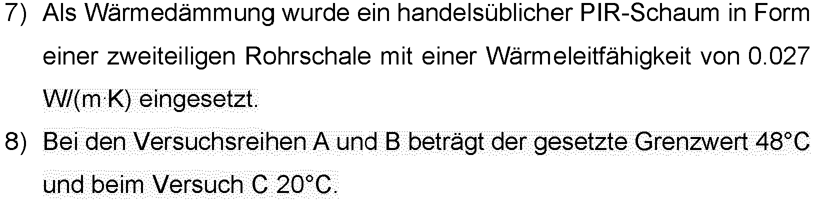

Die Versuchsreihen A und B zeigen das Abkühlen von Warmwasser mit einer Temperatur von 60°C bei Fliessunterbruch des Wassers in einem Edelstahlrohr-Durchmesser von 22 mm (Versuchsreihe A) resp. 54 mm (Versuchsreihe B). Ohne Wärmedämmung kühlt sich das Wasser innerhalb kurzer Zeit ab. Dabei verläuft die Abkühlung des Warmwassers im dickeren Rohr aufgrund der grösseren Masse etwas langsamer (1 Std.) als im dünneren Rohr (20 Min.). Wird nun das Rohr mit einem handelsüblichen PIR-Schaum mit einer Schichtdicke von 50 mm ummantelt, verlängert sich die Zeit, bis der Grenzwert von 48°C erreicht wird, etwa um einen Faktor 4. Wird nun zwischen das Rohr und die Wärmedämmung eine dünne Schicht einer Wärmespeicherschicht (1) umfassend 75% eines geeigneten Latentwärmespeichermaterials (2) einem Schmelzpunkt von 53°C angeordnet, erhöht sich die Zeit, bis der Grenzwert von 48°C erreicht wird, nochmals deutlich. So genügt beim dünneren Rohr (Versuchsreihe A) eine Schichtdicke der Wärmespeicherschicht (1) von 10 mm um die Zeitspanne von 1.5 Std. auf 7 Std. zu erhöhen! Beim dickeren Rohr verlängert eine lediglich 5 mm dünne Wärmespeicherschicht (1) die Zeitspanne von 3.7 Std. auf 6¾ Std. Und eine um 25% dickere Wärmespeicherschicht (1) erhöht die Zeitspanne, bis die 48°C erreicht sind, um weitere 2 Stunden (bei leicht geringerer Schichtdicke der Wärmedämmung).

Die Versuchsreihe C zeigt die Erwärmung von Kaltwasser mit einer Temperatur von 12 bis 13°C bei Fliessunterbruch des Wassers in einem Edelstahlrohr mit einem Durchmesser von 22 cm. Ohne Wärmedämmung wird der Grenzwert von 20°C innerhalb von lediglich 55 Minuten erreicht.

Wird das Rohr mit einer 30 mm dicken Wärmedämmung aus handelsüblichem PIR-Schaum ummantelt, so steigt die Zeitspanne, bis die Wassertemperatur im Rohr den Grenzwert von 20°C erreicht hat, auf 3.2 Std. an. Wird nun zwischen das Rohr und die Wärmedämmung eine dünne Schicht von lediglich 5 mm einer Wärmespeicherschicht (1) umfassend 75% eines geeigneten Latentwärmespeichermaterials (2) mit einem Schmelzpunkt von 17°C angeordnet, erhöht sich die Zeit, bis der Grenzwert von 20°C erreicht wird, sogar auf 10.5 Stunden!

Die Versuche zeigen deutlich, dass schon mit einer dünnen Schicht einer Wärmespeicherschicht (1) mit einem geeigneten Latentwärmespeichermaterials (2) zwischen dem Rohr (4) und der Wärmedämmung (5) eine sehr deutliche Erhöhung der Abkühlung von Warmwasser resp. Der Erwärmung von Kaltwasser in Warm-/Kaltwasserrohren erzielt werden kann. Dabei spielt es keine Rolle, ob das erfindungsgemässe, ummantelte Rohr (41) erhalten wird indem zuerst ein Rohr (4) mit der Wärmespeicherschicht (1) bedeckt und nachfolgend mit einer Wärmedämmung (5) ummantelt wird, oder ob das Rohr (4) mit einem nicht beanspruchten Wärme-Speicher-Verbund (51) ummantelt wird. Das so erhaltene passive Warm-/Kalthaltesystems mit Warm-/Kaltwasserleitungen funktioniert ohne Zufuhr von Energie und erlaubt unzählige Aufwärm-/ Abkühlzyklen ohne Abnutzung. Es ist zudem einfach und kostengünstig herstellbar sowie wartungsfrei.

Im Folgenden wird die vorliegende Erfindung anhand der nachfolgenden Zeichnungen näher erläutert und nicht-limitierende, bevorzugte Ausführungsformen des erfindungsgemässen Verfahrens, des erfindungsgemäss erhaltenen ummantelten Rohres (41) und des nicht beanspruchten Wärme-Speicher-Dämm-Verbunds (51) gezeigt. Diese sind nicht einschränkend auszulegen und werden als Bestandteil der Beschreibung verstanden:
- Fig. 1: zeigt beispielhaft den logarithmisch abfallenden Temperaturverlauf eines warmen, fluiden Mediums entlang des Radius eines Rohres (4) mit Wärmedämmmaterial (5) von innerhalb des Rohres (4) zur Rohrwand (mit d₁ markiert) und weiter durch das Wärmedämmmaterial (5) nach aussen. Die gepunktete Linie ( ········· ) zeigt schematisch den Temperaturverlauf innerhalb des Wärmedämmmaterials (5), wobei zwischen dem Rohr (4) und des Wärmedämmmaterials (5) kein Latentwärmespeichermaterial (2) vorhanden ist. Auch das Wärmedämmmaterial (5) selber enthält kein Latentwärmespeichermaterial (2). Somit stellt die gepunktete Linie eine herkömmliche Ausführung des Standes der Technik dar. Die gestrichelte Linie ( - - - ) zeigt schematisch den Temperaturverlauf innerhalb der Wärmedämmung, wobei in die Wärmedämmung herkömmliches mikroverkapseltes Latentwärmespeichermaterial (2) eingearbeitet ist. Es wird der Temperaturverlauf gezeigt während das Latentspeichermaterial noch nicht vollständig erstarrt ist, also relativ kurz nach Abschalten der Durchströmung des Rohres, entsprechend kurz nach Beginn des Warmhaltens. Solche Wärmedämmmaterialien sind in der Literatur bekannt. Auch wenn innerhalb der ganzen Wärmedämmung mikroverkapseltes Latentwärmespeichermaterial (2) verteilt ist, kann nur derjenige Teil des Latentwärmespeichermaterials (2) als Wärmespeicher dienen, welcher auch in flüssiger Form vorliegt, d.h. die Temperatur innerhalb dieses Bereichs der Wärmedämmung muss mindestens der Schmelztemperatur entsprechen. Der Bereich innerhalb der Wärmedämmung welcher so hohe Temperaturen aufweist, ist jedoch in aller Regel äusserst gering (mit d₂ markiert), insbesondere weil auch das Latentwärmespeichermaterial (2) so gewählt wird, dass dessen Schmelzpunkt nur leicht unterhalb der Temperatur des geförderten fluiden Mediums ist. Demzufolge ist auch der Anteil der Wärmedämmung, welcher als Wärmespeicher funktionieren kann, sehr gering. Hingegen weist die Wärmedämmung mit mikroverkapseltem Latentwärmespeichermaterial (2) eine erhöhte Wärmeleitfähigkeit auf, wodurch die Wirkung der Wärmedämmung eingeschränkt wird. Dadurch können sich sogar beide Effekte, d.h. Halten der Temperatur und geringere Wärmedämmung aufgrund erhöhter Wärmeleitfähigkeit, aufheben. Die Linie mit Strich-Punkt ( - · - ) zeigt schematisch den Temperaturverlauf gemäss vorliegender Erfindung. Die Temperatur innerhalb des Rohrs (4) zur Rohrwand (mit d₁ markiert) entspricht auch der Temperatur innerhalb der Wärmespeicherschicht (1) (von d₁ bis d₃ markiert). Erst anschliessend sinkt sie innerhalb des Wärmedämmmaterials (5) (ab d₃) nach aussen ab.
- Fig. 2: zeigt analog Fig. 1 den exponentiell abfallenden Temperaturverlauf T_{R} bei Fliessunterbruch innerhalb des Rohres (4). Die gepunktete Linie ( ········· ) zeigt den Temperaturverlauf nur mit Wärmedämmmaterial (5) gemäss Stand der Technik. Die gestrichelte Linie ( - - - ) zeigt den Temperaturverlauf mit Wärmedämmung enthaltend mikroverkapseltes Latentwärmespeichermaterial (2) gemäss Stand der Technik und die Linie mit Strich-Punkt ( - · - ) zeigt den Temperaturverlauf des Rohres (4) ummantelt gemäss vorliegender Erfindung. Die Temperatur innerhalb des Rohres (4) bis zum Zeitpunkt t₁ entspricht der Temperatur des fluiden Mediums während des Fliessens, d.h. die Temperatur entspricht der gewünschten Temperatur. Wird nun zum Zeitpunkt t₁ die Förderung des fluiden Mediums gestoppt, und wird das Rohr (4) lediglich durch das Wärmedämmmaterial (5) vor dem Abkühlen geschützt ist, sinkt die Temperatur des fluiden Mediums innerhalb des Rohrs (4) relativ schnell (gepunktete Linie ········· ). Enthält die Wärmedämmung mikroverkapseltes Latentwärmespeichermaterial (2) gemäss Stand der Technik (gestrichelte Linie - - - ), sinkt die Temperatur zunächst nur wenig, kann jedoch nicht gehalten werden. Sobald jedoch derjenige Anteil des mikroverkapselten Latentwärmespeichermaterials (2), welcher in der unmittelbaren Nähe des Rohrs (4) und somit in geschmolzenem Zustand vorliegt, d.h. zum Zeitpunkt t₂, seine Phasenübergangsenthalpie abgegeben hat, sinkt die Temperatur und das fluide Medium kühlt sich ab. Mit der Wärmespeicherschicht (1) wird die Temperatur des ummantelten Rohrs (41) auch bei Fliessunterbruch des fluiden Mediums (Zeitpunkt t₁) über eine längere Zeitspanne gehalten (Linie mit Strich-Punkt - · - ), bis alles Latentwärmespeichermaterial (2) die Phasenübergangsenthalpie über das Wärmedämmmaterial (5) an die Umgebung abgegeben hat. Erst dann, d.h. zum Zeitpunkt t₃, kühlt sich das fluide Medium ab. In der Praxis und bei optimierten Schichtdicken ist dies jedoch nur bei untypisch langen Unterbrüchen der Fall, beispielsweise bei längeren Wartungsarbeiten.
- Fig. 3: zeigt analog Fig. 2 die gemessenen Temperaturverläufe von Wasser mit einer Fliesstemperatur von 60°C nach Fliessunterbruch in einem Edelstahlrohr mit einem Aussendurchmesser von 22 mm und einer Wandstärke von 1.2 mm. Die gepunktete Linie ( ········· ) zeigt den Temperaturverlauf im Rohr ohne Wärmedämmmaterial (5) und ohne Wärmespeicherschicht gemäss Stand der Technik. Die gestrichelte Linie ( - - - ) zeigt den Temperaturverlauf mit einer Wärmedämmung (5) aus handelsüblichem PIR-Schaum mit einer Schichtdicke von 50 mm gemäss Stand der Technik. Die Linie mit Strich-Punkt ( - · - ) zeigt den Temperaturverlauf des Rohres (4) ummantelt mit einem nicht beanspruchten Wärme-Speicher-Verbund (51) aus handelsüblichem PIR-Schaum mit einer Schichtdicke von 50 mm und einer 10 mm dicken Schicht aus Wärmespeicherschicht (1), wobei eine zeitlich begrenzte Plafonierung der Rohrtemperatur im Bereich der Schmelztemperatur des Latentwärmespeichermaterials (2) deutlich sichtbar ist; siehe Beispiel 5 und Tabelle 1 zu weiteren Angaben. Durch den Einsatz des nicht beanspruchten Wärme-Speicher-Verbunds (51) mit einer nur 10 mm dicken Wärmespeicherschicht (1) kann die Abkühlzeit von 60°C zum gesetzten Grenzwert (feine, gepunktete und horizontale Linie) von 48°C von 1.5 Std. auf 7 Std. erhöht werden!
- Fig. 4: zeigt analog Fig. 3 die gemessenen Temperaturverläufe von Wasser mit einer Fliesstemperatur von 60°C nach Fliessunterbruch in einem Edelstahlrohr mit einem Aussendurchmesser von 54 mm und einer Wandstärke von 1.5 mm. Die gepunktete Linie ( ········· ) zeigt den Temperaturverlauf im Rohr ohne Wärmedämmmaterial (5) und ohne Wärmespeicherschicht gemäss Stand der Technik. Die gestrichelte Linie ( - - - ) zeigt den Temperaturverlauf mit einer Wärmedämmung (5) aus handelsüblichem PIR-Schaum mit einer Schichtdicke von 50 mm gemäss Stand der Technik. Die Linie mit Strich-Punkt ( - · - ) zeigt den Temperaturverlauf des Rohres (4) ummantelt mit einem nicht beanspruchten Wärme-Speicher-Verbund (51) aus handelsüblichem PIR-Schaum mit einer Schichtdicke von 50 mm und einer 5 mm dicken Wärmespeicherschicht (1). Die Linie mit Strich-Punkt-Punkt-Strich (- · · -) zeigt den Temperaturverlauf des Rohres (4) ummantelt mit einem nicht beanspruchten Wärme-Speicher-Verbund (51) aus handelsüblichem PIR-Schaum mit einer Schichtdicke von 48.75 mm und einer 6.25 mm dicken Wärmespeicherschicht (1); siehe Beispiel 5 und Tabelle 1 zu weiteren Angaben. Ist das Rohr (4) mit dem Wärme-Speicher-Verbund (51) umgeben, ist eine zeitlich begrenzte Plafonierung der Rohrtemperatur im Bereich der Schmelztemperatur des Latentwärmespeichermaterials (2) deutlich sichtbar. Durch den Einsatz des nicht beanspruchten Wärme-Speicher-Verbunds (51) mit einer nur 5 mm dicken Wärmespeicherschicht (1) kann die Abkühlzeit von 60°C auf 48°C von 3.7 Std. auf 6.75 Std. erhöht werden. Wird eine 6.25 mm dicke Wärmespeicherschicht (1) eingesetzt, kann die Abkühlzeit von 60°C zum gesetzten Grenzwert (feine, gepunktete und horizontale Linie) von 48°C sogar auf 8.75 Std. erhöht werden!

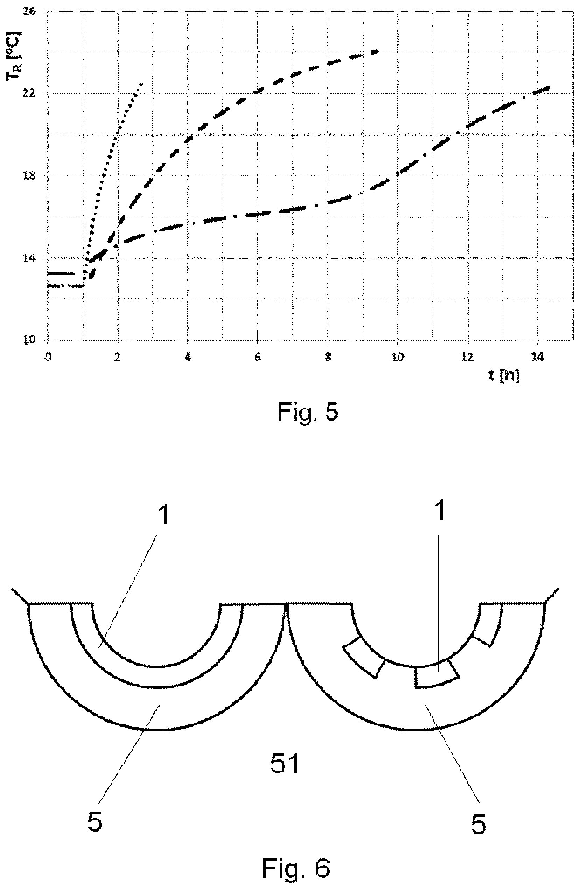

- Fig. 5: zeigt analog Fig. 3 die gemessenen Temperaturverläufe von Wasser mit einer Fliesstemperatur von 12 bis 13°C nach Fliessunterbruch in einem Edelstahlrohr mit einem Aussendurchmesser von 22 mm und einer Wandstärke von 1.2 mm. Die gepunktete Linie ( ········· ) zeigt den Temperaturverlauf im Rohr ohne Wärmedämmmaterial (5) und ohne Wärmespeicherschicht gemäss Stand der Technik. Die gestrichelte Linie ( - - - ) zeigt den Temperaturverlauf mit einer Wärmedämmung (5) aus handelsüblichem PIR-Schaum mit einer Schichtdicke von 30 mm gemäss Stand der Technik. Die Linie mit Strich-Punkt ( - · - ) zeigt den Temperaturverlauf des Rohres (4) ummantelt mit einem nicht beanspruchten Wärme-Speicher-Verbund (51) aus handelsüblichem PIR-Schaum mit einer Schichtdicke von 50 mm und einer 5 mm dicken Wärmespeicherschicht (1); siehe Beispiel 5 und Tabelle 1 zu weiteren Angaben. Durch den Einsatz des nicht beanspruchten Wärme-Speicher-Verbunds (51) mit einer nur 5 mm dicken Wärmespeicherschicht (1) kann die Aufwärmzeit von 12 bis 13°C zum gesetzten Grenzwert (feine, gepunktete und horizontale Linie) von 20°C von 55 Minuten auf 10.5 Std. erhöht werden!
- Fig. 6: zeigt beispielhaft einen nicht beanspruchten Wärme-Speicher-Dämm-Verbund (51) in Form einer Rohrschale. Die zwei Hälften sind beispielhaft aussenseitig mit einer Faser-verstärkten Schutzfolie umgeben, was mit den herausstehenden Lappen links und rechts angedeutet ist. dadurch werden sie zusammengehalten und können bequem um ein Rohr (4) gelegt werden, dessen Aussendurchmesser idealerweise bündig in den Innendurchmesser der Rohrschale passt. Die linke Ausführungsform der Rohrschale weist eine durchgehende Wärmespeicherschicht (1) auf, die aussen von einer durchgehenden Schicht Wärmedämmmaterial (5) umgeben ist, während die rechte Ausführungsform - als ein Ausführungsbeispiel - drei Streifen der Wärmespeicherschicht (1) aufweisen, die in Ausnehmungen des Wärmedämmmaterials (5) eingelassen sind. Die Wärmespeicherschicht (1) kann beispielsweise mittels Kleben an das Wärmedämmmaterial (5) befestigt werden, was eine bevorzugte Ausführungsform des linken Wärme-Speicher-Dämm-Verbunds (51), d.h. Rohrschalenhälfte, ist. Alternativ kann die Wärmedämmschicht (1) auch beispielsweise in Ausnehmungen des Wärmedämmmaterials (5) eingedrückt werden und so mechanisch befestigt sein.
- Fig. 7: zeigt beispielhaft ein Rohr (4), das mit einer länglichen rechteckigen Wärmespeicherschicht (1) spiralförmig umgeben ist. Darüber ist Wärmedämmmaterial (5) angeordnet, das beispielsweise in Form einer Rohrschale aus Wärmedämmmaterial (5) oder als Wärme-Speicher-Dämm-Verbund (51) um das bedeckte Rohr (4) gelegt wird. Alternativ kann das bedeckte Rohr (4) auch in einen Schlauch aus Wärmedämmmaterial (5) oder Wärme-Speicher-Dämm-Verbund (51) hineingestossen werden. Zusammen bilden sie das erfindungsgemässe ummantelte Rohr (41).
- Fig. 8: zeigt beispielhaft die Wärmespeicherschicht (1) in Form eines Komposits (13) gemäss Ausführungsform i). An der unteren Seite der Wärmespeicherschicht (1) ist eine Schicht (11) angebracht. So kann beispielsweise ein mittels Extrusion hergestellter Komposit (13) aus Matrix-Material (3) und Latentwärmespeichermaterial (2) auf die Schicht (11) aufgebracht und zur Wärmespeicherschicht (1) geformt werden. Das Latentwärmespeichermaterial (2) ist innerhalb dem Matrix-Material (3), welches im Komposit (13) typischerweise eine kontinuierliche Phase bildet, in fein verteilten Domänen angeordnet.

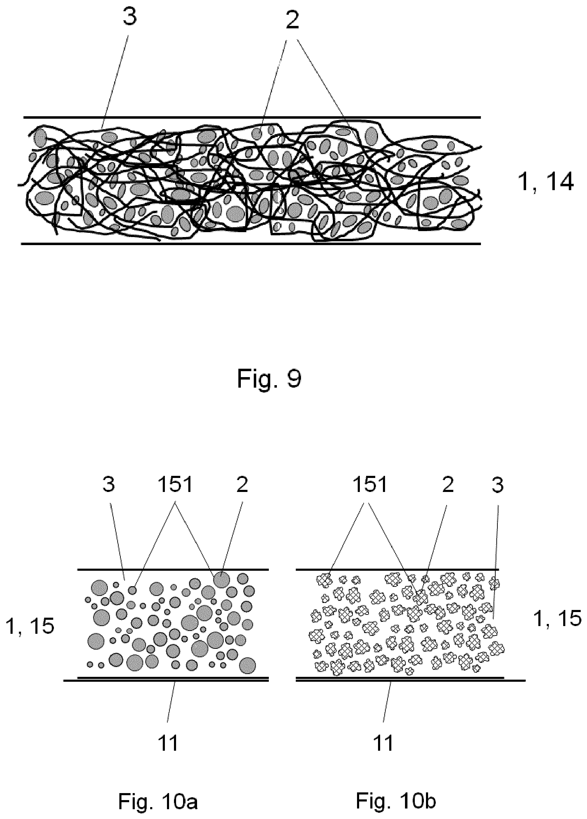

- Fig. 9: zeigt beispielhaft die Wärmespeicherschicht (1) in Form eines Komposits (14) gemäss Ausführungsform ii). An der unteren Seite der Wärmespeicherschicht (1) ist ebenfalls eine Schicht (11) angebracht. Im dargestellten Komposit (14) ist das Latentwärmespeichermaterial (2) in einem Vlies absorbiert.
- Fig. 10: zeigt beispielhaft zwei Ausführungsformen der Wärmespeicherschicht (1) in Form eines Komposits (15), wobei beide auf einer Schicht (11) angeordnet sind. In der kontinuierlichen Phase des Matrix-Materials (3) ist ein Pulver und/oder Granulat (151) verteilt, beispielsweise in Form von mikroverkapseltem Latentwärmespeichermaterial (2), wie in Fig. 10a dargestellt, oder in Form von pulver- oder granulatförmigem Trägermaterial (151), auf welches Latentwärmespeichermaterial (2) sorbiert ist, wie in Fig. 10b dargestellt.

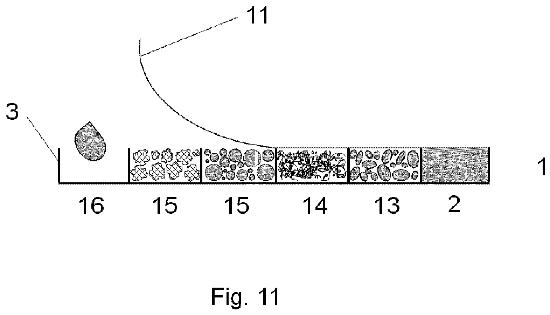

- Fig. 11: zeigt beispielhaft das Matrix-Material (3) in Form von Kammern. Zur leichteren Befüllung der Kammern können diese beispielsweise auf einer Seite zunächst offen sein. Nach der Befüllung können dann die Kammern mit einer Schicht (11) überdeckt und somit abgedichtet werden. Die Kammern können beispielsweise mit reinem Latentwärmespeichermaterial (2), mit dem Komposit (13), dem Komposit (14), dem Komposit (15) und/oder dem Komposit (16), welcher ein Latentwärmespeichermaterial (2) und einen Verdicker umfasst und beispielsweise in Form einer hochviskosen Flüssigkeit, eines Gels, Pulvers, Granulats, Schuppen und/oder Paste vorliegt, befüllt werden. In Fig. 8 wird die letzte Kammer gerade mit dem Komposit (16) befüllt.

## Patentansprüche

1. Verfahren zum Halten der Temperatur von fluiden Medien in Rohren auch bei Fliessunterbruch der fluiden Medien, wobei die Rohre für die Gebäude- und Haustechnik, den Hochbau sowie für chemische und verfahrenstechnische Anlagen geeignet sind, wobei
a) in einem ersten Schritt eine Wärmespeicherschicht (1) hergestellt wird umfassend mindestens ein Latentwärmespeichermaterial (2) und mindestens ein Matrix-Material (3), wobei, falls das Latentwärmespeichermaterial (2) im Matrix-Material (3) in mikroverkapselter Form vorliegt, das Matrix-Material (3) nicht ein Wärmedämmmaterial (5) ist, und
b) in einem zweiten Schritt die Wärmespeicherschicht (1) um ein Rohr (4) angeordnet wird und anschliessend das mit der Wärmespeicherschicht (1) bedeckte Rohr (4) mit Wärmedämmmaterial (5) ummantelt und so ein ummanteltes Rohr (41) erhalten wird, **dadurch gekennzeichnet, dass**
das Wärmedämmmaterial (5) eine Wärmeleitfähigkeit von ≤ 0.1 W/(m·K) aufweist und in Form einer Rohrschale ist**.**

2. Verfahren nach Anspruch 1, **dadurch gekennzeichnet, dass** mindestens eine Seite der Wärmespeicherschicht (1) von einer Schicht (11) bedeckt ist, wobei die Schicht (11) bevorzugt eine Papierschicht, eine Kunststoff-Folie, insbesondere eine Polyethylen-, PE-, Polypropylen-, PP-, Polystyrol-, PS-, Polyethylenterephthalat-, PET- und/oder Kunststoff-Laminat-Folie, einer Metall-Folie, insbesondere eine Aluminium-, Kupfer-, Zinn-, Zink- und/oder Stahl-Folie, eine Metall-Kunststoff-Schicht und/oder ein Laminat umfasst, wobei die Schicht (11) auch mittels Fasern, insbesondere Glasfasern, Carbonfasern und/oder Kunststofffasern, verstärkt sein kann.

3. Verfahren nach Anspruch 1 oder 2, **dadurch gekennzeichnet, dass** die Wärmespeicherschicht (1) im Wesentlichen
i. einen Komposit (13) darstellt, wobei der Komposit (13) durch Erwärmen, Mischen und Abkühlen mindestens eines Latentwärmespeichermaterials (2), mindestens eines Matrix-Materials (3) und gegebenenfalls mindestens eines Keimbildungsadditivs erhalten wird, wobei gegebenenfalls der Komposit (13) zu Fasern weiterverarbeitet ist,
ii. einen Komposit (14) darstellt, wobei der Komposit (14) das Latentwärmespeichermaterial (2) umfasst, welches auf dem Matrix-Material (3) sorbiert ist, wobei das Matrix-Material (3) bevorzugt ein Vlies, ein Gewebe und/oder ein flächiges poröses Material darstellt, wobei das Vlies und/oder Gewebe gegebenenfalls Fasern umfassen kann, die aus dem Komposit (13) hergestellt sind,
iii. einen Komposit (15) darstellt umfassend ein Pulver und/oder Granulat (151), welches mit mindestens einem Matrix-Material (3), insbesondere einem Klebstoff, verbunden ist, wobei das Pulver und/oder Granulat (151) bevorzugt als mikroverkapseltes Latentwärmespeichermaterial (2) vorliegt und/oder das Latentwärmespeichermaterial (2) auf porösem pulver- und/oder granulatförmigem Trägermaterial sorbiert ist,
iv. einen Komposit (16) darstellt umfassend das Latentwärmespeichermaterial (2) und einen Verdicker, wobei der Komposit (16) in Form einer hochviskosen Flüssigkeit, eines Gels, Pulvers, Granulats, Schuppen und/oder Paste vorliegt, und/oder
v. eine Vielzahl von Kammern aus Matrix-Material (3) umfasst, wobei die Kammern Latentwärmespeichermaterial (2) enthalten, wobei das Latentwärmespeichermaterial (2) bevorzugt in reiner Form, als Pulver und/oder Granulat (151), als Komposit (13, 14, 15, 16) und/oder Mischungen davon, vorliegt.

4. Verfahren nach mindestens einem der Ansprüche 1 bis 3, **dadurch gekennzeichnet, dass** die Menge an Latentwärmespeichermaterial (2) in der Wärmespeicherschicht (1) so gewählt wird, dass die Wärmekapazität fest/flüssig der Wärmespeicherschicht (1) innerhalb eines Temperaturbereichs von 10 K mindestens 50 kJ, bevorzugt mindestens 80 kJ, insbesondere mindestens 120 kJ, pro kg Wärmespeicherschicht (1) und gemessen mittels DSC nach EN ISO 11357-1 und -4, beträgt.

5. Verfahren nach mindestens einem der Ansprüche 1 bis 4, **dadurch gekennzeichnet, dass** die Wärmespeicherschicht (1) im Wesentlichen aus
- 30 bis 95 Gew.-% Latentwärmespeichermaterial (2),
- 5 bis 70 Gew.-% Matrix-Material (3), und
- 0 bis 20 Gew.-% weiteren Komponenten besteht.

6. Verfahren nach mindestens einem der Ansprüche 1 bis 5, **dadurch gekennzeichnet, dass** das Latentwärmespeichermaterial (2) einen Schmelzpunkt zwischen -182°C und +175°C, bevorzugt zwischen - 80°C und +150°C, insbesondere zwischen -25°C und +125°C, aufweist.

7. Verfahren nach mindestens einem der Ansprüche 1 bis 6, **dadurch gekennzeichnet, dass** das Latentwärmespeichermaterial (2) mindestens eine organische Verbindung, insbesondere ein Kohlenwasserstoff, Paraffin, Alkohol, Glykol, Polyol, Zucker, Keton, Ester, Ether, Carbonsäure, Fettsäure, Amid, eine Schwefel-, Phosphor- und/oder Stickstoff-Verbindung, und/oder eine anorganische Verbindung, insbesondere ein anorganisches Salz, Salzhydrat, Wasser und/oder eine wässrige Mischung, umfasst.

8. Verfahren nach mindestens einem der Ansprüche 1 bis 7, **dadurch gekennzeichnet, dass** das Matrix-Material (3) ein synthetisches und/oder natürliches Polymer, insbesondere ein Polymer auf Basis olefinischer Monomere wie Acrylate, Styrol und/oder Olefine, ein Block-Copolymer, ein Kondensationspolymer, ein Biopolymer, insbesondere ein Protein, ein Polysaccharid, und/oder eine Naturfaser, ein Trägermaterial, ein Verdicker und/oder ein Klebstoff, darstellt.

9. Verfahren nach mindestens einem der Ansprüche 1 bis 8, **dadurch gekennzeichnet, dass** das Rohr (4) ein Glasrohr, ein Metallrohr, insbesondere ein Messingrohr, Stahlrohr, Edelstahlrohr, Aluminiumrohr oder Kupferrohr; oder ein Kunststoffrohr, insbesondere ein Rohr aus PVC, Acrylglas, Polyurethan, Polycarbonat, Polybutadien oder Verbundwerkstoffen.

10. Verfahren nach mindestens einem der Ansprüche 1 bis 9, **dadurch gekennzeichnet, dass** das Wärmedämmmaterial (5) auf expandiertem Polystyrol (EPS), extrudiertem Polystyrol (XPS), Polyurethan (PUR), Polyisocyanurat (PIR), Phenolharz (PF), flexibler Elastomerschaum (FEF), Polyethylenschaum (PEF), Harnstoff-Formaldehydharzschaum (UF), PVC-Hartschaum, Polyurethan-Spritzdämmung, Kautschuk, Styrol-Butadien-Kautschuk (SBR), Ethylen-Propylen-Dien-Kautschuk (EPDM), Mineralfaser, Mineralschaum, Mineralwolle (MW), Steinwolle, Glaswolle, Schaumglas (CG), Blähton, Perlit und Blähperlit (EPB), Vermiculit und expandiertes Vermiculit, Porenbeton, Holzfaser-Dämmplatte (WF), Holzwolle-Dämmplatte (WW), Zellulosedämmstoff (CI), Kork, Korkschrot, Korkplatte und Korkdämmplatte (ICB),
Mikroporöser Dämmstoff, Aerogel, Vakuumisolationspaneel (VIP), Vakuumdämmung und/oder Dämmstoffe tierischen und/oder pflanzlichen Ursprungs, wie Dämmplatten aus Schafswolle, Schilfrohrplatten, Kokosfasermatten und/oder Flachsfaserplatten basiert.

11. Ummanteltes Rohr (41) erhalten durch
- einen ersten Schritt, bei welchem eine Wärmespeicherschicht (1) hergestellt wird umfassend mindestens ein Latentwärmespeichermaterial (2) und mindestens ein Matrix-Material (3), wobei, falls das Latentwärmespeichermaterial (2) im Matrix-Material (3) in mikroverkapselter Form vorliegt, das Matrix-Material (3) nicht ein Wärmedämmmaterial (5) ist, und
- einen zweiten Schritt, bei welchem die Wärmespeicherschicht (1) um ein Rohr (4) angeordnet wird und anschliessend das mit der Wärmespeicherschicht (1) bedeckte Rohr (4) mit Wärmedämmmaterial (5) in Form einer Rohrschale ummantelt und so das ummantelte Rohr (41) erhalten wird, wobei das ummantelte Rohr (41) geeignet ist für die Gebäude- und Haustechnik sowie für verfahrenstechnische Anlagen, wobei das Wärmedämmmaterial (5) eine Wärmeleitfähigkeit von ≤ 0.1 W/(m.K) aufweist, und das Rohr (4) bevorzugt ein Glasrohr, ein Metallrohr, insbesondere ein Messingrohr, Stahlrohr, Edelstahlrohr, Aluminiumrohr oder Kupferrohr; oder ein Kunststoffrohr, insbesondere ein Rohr aus PVC, Acrylglas, Polyurethan, Polycarbonat, Polybutadien oder Verbundwerkstoffen, ist.

12. Passives Warmhaltesystem für Warmwasserleitungen und/oder Kalthaltesystem für Kaltwasserleitungen in Wohn- und Büro-Gebäuden sowie für chemische und verfahrenstechnische Anlagen umfassend mindestens ein ummanteltes Rohr (41) nach Anspruch 11.

13. Verwendung ummantelten Rohrs (41) nach Anspruch 11 zum Warmhalten von fluiden Medien, insbesondere als Warmwasserleitung in Gebäuden, Wasserdampfleitungen, Leitungen zum Transport von Chemikalien, Bitumen, Silikonen, Schmelzklebstoffen und/oder Lebensmitteln wie beispielsweise Schokolade, und/oder zum Kalthalten von fluiden Medien, insbesondere von fluiden Medien unter Druck, von Gasen und/oder Flüssigkeiten, insbesondere von Kühlflüssigkeiten, Chemikalien, Lösungsmittel mit hohem Dampfdruck und/oder Lebensmitteln wie beispielsweise Milchprodukte und Getränke.

## Claims

1. Method for maintaining the temperature of fluid media in pipes even when the flow of the fluid media is interrupted, wherein the pipes are suitable for building services engineering, structural engineering, and chemical and process engineering plants, wherein
a) in a first step, a heat storage layer (1) is produced comprising at least one latent heat storage material (2) and at least one matrix material (3), wherein, if the latent heat storage material (2) is present in the matrix material (3) in microencapsulated form, the matrix material (3) is not a thermal insulation material (5), and
b) in a second step, the heat storage layer (1) is arranged around a pipe (4) and then the pipe (4) covered with the heat storage layer (1) is sheathed with thermal insulation material (5), thus obtaining a sheathed pipe (41), **characterized in that** the thermal insulation material (5) has a thermal conductivity of <_0.1 W/(m K) and is in the shape of a pipe shell.

2. Method according to claim 1, **characterized in that** at least one side of the heat storage layer (1) is covered by a layer (11), wherein the layer (11) is preferably a paper layer, a plastic film, in particular a polyethylene, PE, polypropylene, PP, polystyrene, PS, polyethylene terephthalate (PET) and/or plastic laminate film, a metal film, in particular an aluminum, copper, tin, zinc and/or steel film, a metal-plastic layer and/or a laminate, wherein the layer (11) may also be reinforced by means of fibers, in particular glass fibers, carbon fibers and/or plastic fibers.

3. Method according to claim 1 or 2, **characterized in that** the heat storage layer (1) essentially
i. constitutes a composite (13), wherein the composite (13) is obtained by heating, mixing, and cooling of at least one latent heat storage material (2), at least one matrix material (3), and optionally at least one nucleation additive, wherein the composite (13) is optionally further processed into fibers,
ii. constitutes a composite (14), wherein the composite (14) comprises the latent heat storage material (2) which is sorbed on the matrix material (3), wherein the matrix material (3) preferably represents a mat of fibers, a fabric and/or a flat porous material, wherein the mat of fibers and/or fabric may optionally comprise fibers produced from the composite (13),
iii. constitutes a composite (15) comprising a powder and/or granulate (151) which is bonded to at least one matrix material (3), in particular an adhesive, wherein the powder and/or granulate (151) is preferably present as a microencapsulated latent heat storage material (2) and/or the latent heat storage material (2) is sorbed on a porous powder and/or granulate-shaped carrier material,
iv. constitutes a composite (16) comprising the latent heat storage material (2) and a thickener, wherein the composite (16) is in the form of a highly viscous liquid, a gel, powder, granulate, flakes, and/or paste, and/or
v. comprises a plurality of chambers made of matrix material (3), wherein the chambers contain latent heat storage material (2), wherein the latent heat storage material (2) is preferably present in pure form, as powder and/or granules (151), as a composite (13, 14, 15, 16) and/or mixtures thereof.

4. Method according to at least one of claims 1 to 3, **characterized in that** the amount of latent heat storage material (2) in the heat storage layer (1) is selected such that the solid/liquid heat capacity of the heat storage layer (1) within a temperature range of 10 K is at least 50 kJ, preferably at least 80 kJ, in particular at least 120 kJ, per kg of heat storage layer (1) and measured by DSC according to EN ISO 11357-1 and -4.

5. Method according to at least one of claims 1 to 4, **characterized in that** the heat storage layer (1) consists essentially of
- 30 to 95 wt% latent heat storage material (2),
- 5 to 70 wt% matrix material (3), and
- 0 to 20 wt% of other components.

6. Method according to at least one of claims 1 to 5, **characterized in that** the latent heat storage material (2) has a melting point between -182°C and +175°C, preferably between -80°C and +150°C, in particular between -25°C and +125°C.

7. Method according to at least one of claims 1 to 6, **characterized in that** the latent heat storage material (2) comprises at least one organic compound, in particular a hydrocarbon, paraffin, alcohol, glycol, polyol, sugar, ketone, ester, ether, carboxylic acid, fatty acid, amide, a sulfur compound, phosphorus compound, and/or nitrogen compound, and/or an inorganic compound, in particular an inorganic salt, salt hydrate, water, and/or an aqueous mixture.

8. Method according to at least one of claims 1 to 7, **characterized in that** the matrix material (3) is a synthetic and/or natural polymer, in particular a polymer based on olefinic monomers such as acrylates, styrene and/or olefins, a block copolymer, a condensation polymer, a biopolymer, in particular a protein, a polysaccharide, and/or a natural fiber, a carrier material, a thickener and/or an adhesive.

9. Method according to at least one of claims 1 to 8, **characterized in that** the pipe (4) is a glass pipe, a metal pipe, in particular a brass pipe, steel pipe, stainless steel pipe, aluminum pipe and/or copper pipe and/or a plastic pipe, in particular a pipe made of PVC, acrylic glass, polyurethane, polycarbonate, polybutadiene and/or composite materials.

10. Method according to at least one of claims 1 to 9, **characterized in that** the thermal insulation material (5) is based on expanded polystyrene (EPS), extruded polystyrene (XPS), polyurethane (PUR), polyisocyanurate (PIR), phenolic resin (PF), flexible elastomer foam (FEF), polyethylene foam (PEF), urea-formaldehyde resin foam (UF), rigid PVC foam, polyurethane spray insulation, rubber, styrenebutadiene rubber (SBR), ethylene propylene diene rubber (EPDM), mineral fiber, mineral foam, mineral wool (MW), rock wool, glass wool, cellular glass (CG), expanded clay, perlite and expanded perlite (EPB), vermiculite and expanded vermiculite, aerated concrete, wood fiber insulation board (WF), wood wool insulation board (WW), cellulose insulation (CI), cork, cork granules, cork board and cork insulation board (ICB), microporous insulation, aerogel, vacuum insulation panel (VIP), vacuum insulation and/or insulation materials of animal and/or plant origin, such as insulation boards made of sheep's wool, reed boards, coconut fiber mats, and/or flax fiber boards.

11. Sheathed pipe (41) obtained by
- a first step in which a heat storage layer (1) is produced comprising at least one latent heat storage material (2) and at least one matrix material (3), wherein, if the latent heat storage material (2) is present in the matrix material (3) in microencapsulated form, the matrix material (3) is not a thermal insulation material (5), and
- a second step in which the heat storage layer (1) is arranged around a pipe (4) and then the pipe (4) covered with the heat storage layer (1) is covered with with thermal insulation material (5) in the form of a pipe shell, thus obtaining the sheathed pipe (41), wherein the sheathed pipe (41) is suitable for building services and domestic engineering as well as for process engineering systems, wherein the thermal insulation material (5) has a thermal conductivity of ≤ 0.1 W/(m.K), and the pipe (4) is preferably a glass pipe, a metal pipe, in particular a brass pipe, steel pipe, stainless steel pipe, aluminum pipe, or copper pipe; or a plastic pipe, in particular a pipe made of PVC, acrylic glass, polyurethane, polycarbonate, polybutadiene, or composite materials.

12. Passive heat retention system for hot water pipes and/or cold retention system for cold water pipes in residential and office buildings as well as for chemical and process engineering plants, comprising at least one sheathed pipe (41) according to claim 11.

13. Use of a sheathed pipe (4) according to claim 11 for keeping fluid media warm, in particular as a hot water pipe in buildings, water vapor pipes, pipes for transporting chemicals, bitumen, silicones, hot melt adhesives, and/or foodstuffs such as chocolate, and/or for keeping fluid media cold, in particular fluid media under pressure, gases and/or liquids, in particular coolants, chemicals, solvents with high vapor pressure, and/or foodstuffs such as dairy products and beverages.

## Revendications

1. Procédé de maintien de la température de fluides dans des tuyaux, même en cas d'interruption de l'écoulement des fluides, les tuyaux étant appropriés à la technique du bâtiment et de construction, à l'ingénierie des structures ainsi qu'aux installations chimiques et de génie des procédés, dans lequel
a) dans une première étape, une couche d'accumulation de chaleur (1) comprenant au moins un matériau d'accumulation de chaleur latente (2) et au moins un matériau de matrice (3) est fabriquée, dans lequel, si le matériau d'accumulation de chaleur latente (2) est présent dans le matériau de matrice (3) sous forme microencapsulée, le matériau de matrice (3) n'est pas un matériau d'isolation thermique (5), et
b) dans une deuxième étape, la couche d'accumulation de chaleur (1) est disposée autour d'un tuyau (4), puis le tuyau (4) recouvert de la couche d'accumulation de chaleur (1) est enveloppé d'un matériau d'isolation thermique (5) et on obtient ainsi un tuyau enveloppé (41), **caractérisé en ce que** le matériau d'isolation thermique (5) présente une conductivité thermique ≤ 0,1 W/(m·K) et se présente sous la forme d'une enveloppe de tuyau.

2. Procédé selon la revendication 1, **caractérisé en ce qu'**au moins une face de la couche d'accumulation de chaleur (1) est recouverte par une couche (11), la couche (11) comprenant de préférence une couche de papier, une feuille de matière plastique, en particulier une feuille stratifiée de polyéthylène, de PE, de polypropylène, de PP, de polystyrène, de PS, de polyéthylène téréphtalate, de PET et/ou de matière plastique, une feuille métallique, en particulier une feuille d'aluminium, de cuivre, d'étain, de zinc et/ou d'acier, une couche de matière plastique métallique et/ou un stratifié, la couche (11) pouvant également être renforcée au moyen de fibres, en particulier de fibres de verre, de fibres de carbone et/ou de fibres de matière plastique.

3. Procédé selon la revendication 1 ou 2, **caractérisé en ce que** la couche d'accumulation de chaleur (1) sensiblement
i. représente un composite (13), ledit composite (13) étant obtenu par chauffage, mélange et refroidissement d'au moins un matériau d'accumulation de chaleur latente (2), d'au moins un matériau de matrice (3) et, le cas échéant, d'au moins un additif de nucléation, le cas échéant, le composite (13) étant transformé en fibres,
ii. représente un composite (14), le composite (14) comprenant le matériau d'accumulation de chaleur latente (2) qui est adsorbé sur le matériau de matrice (3), le matériau de matrice (3) représentant de préférence un non-tissé, un tissu et/ou un matériau poreux plat, où le non-tissé et/ou le tissu peuvent, le cas échéant, comprendre des fibres fabriquées à partir du composite (13),
iii. représente un composite (15) comprenant une poudre et/ou un granulat (151) qui est lié(e) à au moins un matériau de matrice (3), en particulier un adhésif, la poudre et/ou le granulat (151) se présentant de préférence sous forme d'un matériau d'accumulation de chaleur latente microencapsulé (2) et/ou le matériau d'accumulation de chaleur latente (2) étant adsorbé sur un matériau support poreux en forme de poudre et/ou de granulat,
iv. représente un composite (16) comprenant le matériau d'accumulation de chaleur latente (2) et un épaississant, le composite (16) se présentant sous la forme d'un liquide très visqueux, d'un gel, d'une poudre, de granulat, d'écailles et/ou d'une pâte, et/ou
v. comprend une pluralité de compartiments en matériau de matrice (3), les compartiments contenant un matériau d'accumulation de chaleur latente (2), le matériau d'accumulation de chaleur latente (2) se présentant de préférence sous forme pure, de poudre et/ou de granulat (151), de composite (13, 14, 15, 16) et/ou de mélanges de ceux-ci.

4. Procédé selon au moins l'une des revendications 1 à 3, **caractérisé en ce que** la quantité de matériau d'accumulation de chaleur latente (2) dans la couche d'accumulation de chaleur (1) est choisie de telle sorte que la capacité thermique solide/liquide de la couche d'accumulation de chaleur (1) dans une plage de température de 10 K soit d'au moins 50 kJ, de préférence d'au moins 80 kJ, en particulier d'au moins 120 kJ, par kg de couche d'accumulation de chaleur (1) et mesurée par DSC selon EN ISO 11357-1 et -4.

5. Procédé selon au moins l'une des revendications 1 à 4, **caractérisé en ce que** la couche d'accumulation de chaleur (1) est essentiellement composés de
- 30 à 95 % en poids de matériau d'accumulation de chaleur latente (2),
- 5 à 70 % en poids de matériau de matrice (3), et
- 0 à 20 % en poids d'autres composants.

6. Procédé selon au moins l'une des revendications 1 à 5, **caractérisé en ce que** le matériau d'accumulation de chaleur latente (2) présente un point de fusion compris entre -182 °C et +175 °C, de préférence entre -80 °C et +150 °C, en particulier entre -25 °C et +125 °C.

7. Procédé selon au moins l'une des revendications 1 à 6, **caractérisé en ce que** le matériau d'accumulation de chaleur latente (2) comprend au moins un composé organique, notamment un hydrocarbure, une paraffine, un alcool, un glycol, un polyol, un sucre, une cétone, un ester, un éther, un acide carboxylique, un acide gras, un amide, un composé soufré, phosphoré et/ou azoté, et/ou un composé inorganique, notamment un sel inorganique, un sel hydraté, de l'eau et/ou un mélange aqueux.

8. Procédé selon au moins l'une des revendications 1 à 7, **caractérisé en ce que** le matériau de la matrice (3) est un polymère synthétique et/ou naturel, notamment un polymère à base de monomères oléfiniques tels que des acrylates, du styrène et/ou des oléfines, un copolymère séquencé, un polymère de condensation, un biopolymère, notamment une protéine, un polysaccharide, et/ou une fibre naturelle, un matériau support, un épaississant et/ou un adhésif.

9. Procédé selon au moins l'une des revendications 1 à 8, **caractérisé en ce que** le tuyau (4) est un tuyau en verre, un tuyau en métal, en particulier un tuyau en laiton, un tuyau en acier, un tuyau en acier inoxydable, un tuyau en aluminium ou un tuyau en cuivre ; ou un tuyau en plastique, en particulier un tuyau en PVC, en verre acrylique, en polyuréthane, en polycarbonate, en polybutadiène ou en matériaux composites.

10. Procédé selon au moins l'une des revendications 1 à 9, **caractérisé en ce que** le matériau d'isolation thermique (5) est basé sur du polystyrène expansé (EPS), du polystyrène extrudé (XPS), du polyuréthane (PUR), du polyisocyanurate (PIR), de la résine phénolique (PF), de la mousse d'élastomère flexible (FEF), de la mousse de polyéthylène (PEF), de la mousse de résine urée-formaldéhyde (UF), de la mousse rigide de PVC, de l'isolation par pulvérisation de polyuréthane, du caoutchouc, du caoutchouc styrène-butadiène (SBR), du caoutchouc éthylène-propylène-diène (EPDM), de la fibre minérale, de la mousse minérale, de la laine minérale (MW), de la laine de roche, de la laine de verre, du verre cellulaire (CG), de l'argile expansée, de la perlite et de la perlite expansée (EPB), de la vermiculite et de la vermiculite expansée, du béton cellulaire, du panneau isolant en fibres de bois (WF), du panneau isolant en copeaux de bois (WW), d'un isolant en ouate de cellulose (CI), de liège, de liège concassée, de panneau de liège et panneau isolant en liège (ICB), d'isolant microporeux, d'aérogel, panneau isolant sous vide (VIP), d'isolation sous vide et/ou isolants d'origine animale et/ou végétale, tels que les panneaux isolants en laine de mouton, panneaux en roseau, tapis en fibre de coco et/ou panneaux en fibre de lin.

11. Tuyau enveloppé (41) obtenu par
- dans une première étape, dans laquelle une couche d'accumulation de chaleur (1) comprenant au moins un matériau d'accumulation de chaleur latente (2) et au moins un matériau de matrice (3) est fabriquée, dans lequel, si le matériau d'accumulation de chaleur latente (2) est présent dans le matériau de matrice (3) sous forme microencapsulée, le matériau de matrice (3) n'est pas un matériau d'isolation thermique (5), et
- une deuxième étape, dans laquelle la couche d'accumulation de chaleur (1) est disposée autour d'un tuyau (4), puis le tuyau (4) recouvert de la couche d'accumulation de chaleur (1) est enveloppé d'un matériau d'isolation thermique (5) sous la forme d'une enveloppe de tuyau et on obtient ainsi le tuyau enveloppé (41), le tuyau enveloppé (41) étant appropriés à la technique du bâtiment et de construction ainsi qu'aux installations de génie des procédés, le matériau d'isolation thermique (5) présentant une conductivité thermique ≤ 0,1 W/(m.K), et le tuyau (4) étant de préférence un tuyau de verre, un tuyau métallique, en particulier un tuyau en laiton, un tuyau en acier, un tuyau en acier inoxydable, un tuyau en aluminium ou un tuyau en cuivre ; ou un tuyau en plastique, en particulier un tuyau en PVC, en verre acrylique, en polyuréthane, en polycarbonate, en polybutadiène ou en matériaux composites.

12. Système passif de maintien en température pour des conduites d'eau chaude et/ou système de maintien en température pour des conduites d'eau froide dans des bâtiments résidentiels et de bureaux ainsi que pour les installations chimiques et de génie des procédés comprenant au moins un tuyau enveloppé (41) selon la revendication 11.

13. Utilisation de tuyaux enveloppés (41) selon la revendication 11 pour le maintien au chaud de fluides, en particulier comme conduite d'eau chaude dans les bâtiments, conduites de vapeur d'eau, conduites pour le transport de produits chimiques, de bitume, de silicones, d'adhésifs thermofusibles et/ou de produits alimentaires tels que le chocolat, et/ou pour le maintien au froid de fluides, en particulier de fluides sous pression, de gaz et/ou de liquides, en particulier de liquides de refroidissement, de produits chimiques, de solvants à haute pression de vapeur et/ou de produits alimentaires tels que les produits laitiers et les boissons.
